# EUROPEAN PATENT SPECIFICATION

(11) **EP 0 515 562 B1**
(45) Date of publication and mention of the grant of the patent: **13.10.1999**
(21) Application number: 91905456.9
(22) Date of filing: 15.02.1991
(51) Int. Cl.: B29C 67/00

(54) **METHOD OF AND APPARATUS FOR FORMING A SOLID THREE-DIMENSIONAL ARTICLE FROM A LIQUID MEDIUM**
VERFAHREN UND APPARAT ZUR FORMUNG EINES FESTEN DREIDIMENSIONALEN ARTIKELS AUS EINER FLÜSSIGKEIT
PROCEDE ET APPAREIL DE FORMATION D'UN ARTICLE TRIDIMENSIONNEL SOLIDE A PARTIR D'UN MILIEU LIQUIDE

(30) Priority: 15.02.1990 US 479702; 14.02.1991 US 655948
(43) Date of publication of application: 02.12.1992
(73) Proprietor: 3D SYSTEMS, INC., Valencia California 91355 (US)
(72) Inventor: HELLER, Timmy, Boyd, Attleboro, MA 02703 (US); HILL, Ray, McGaffey, Smithfield, RI 02917 (US); SAGGAL, Abdalla, F., Pawtucket, RI 02860 (US)
(74) Representative: Deans, Michael John Percy
(86) International application number: US9100920
(87) International publication number: WO9112120

(56) References cited:
- WO-A-89/09687
- JP-A- 1 031 625
- JP-A- 61 154 815
- JP-A- 61 217 219
- JP-A- 62 101 408
- US-A- 2 775 758
- US-A- 4 575 330
- US-A- 4 961 154
- PATENT ABSTRACTS OF JAPAN vol. 10, no. 301 (M-525)(2357) 14 October 1986 & JP-A-61 114 818 ( FUJITSU LTD ) 2 June 1986

## Description

This invention relates to a method of and apparatus for forming a three-dimensional article constituted by successively selectively solidified layers of a liquid medium solidifiable by application thereto of prescribed energy, according to the preamble of claim 1 and according to the preamble of claim 23 respectively.

In general, apparatus for forming a solid three-dimensional article from a liquid medium capable of solidification when subjected to prescribed energy, are known in the prior art. For example an article by H. Kodama, entitled "Automatic Method for Fabricating a Three-Dimensional Plastic Model with Photo-Hardening Polymer", Review Scientific Instruments, Vol. 52, No. 11, November 1981, pages 1770-1773, discloses a system for generating three-dimensional objects from a liquid medium by irradiating liquid layers with the aid of a computer programmed irradiation source and a translational mechanism. Another arrangement of this general type is disclosed in an article by A. J. Herbert, entitled "Solid Object Generation", Journal of Applied Photographic Engineering 8 (4) August 1982, pages 185-188. A similar arrangement is disclosed in reexamined U.S. Patent No. 4,575,330 to C. W. Hull. Other prior art of interest includes the U.S. Patents Nos. 2,775,578 to Munz, 2,525,532 to Dreywood, 2,381,234 to Symmes, 3,723,120 to Hummel, 3,609,707 to Lewis et al, 4,081,276 to Crivello and 4,252,514 to Gates, and the British Patent No. 566,795 to Gates.

U.S. patent 4,961,154 (Pomeranz et al) builds the three-dimensional article upwardly in a body of liquid medium in a container. For each fresh layer of liquid medium to be solidified additional medium is fed to the container by a supply tube or by spraying. Each of Japanese published patent applications JP-A-61-114817 and JP-A-61-217219 of Fujitsu K.K. discloses a method of and apparatus for forming a three-dimensional article constituted by successively selectively solidified layers of a liquid medium solidifiable by application thereto of a prescribed energy. The article is formed in a body of the liquid medium held in a container and the formation of each solidified layer comprises coating the surface of a last-solidified layer with fresh liquid medium by dispensing liquid medium from above said surface; and applying said prescribed energy to said fresh liquid medium in accordance with a defined pattern to selectively solidify said fresh liquid medium.

It is a feature of the apparatus disclosed in the above Japanese specifications that the supplying of the fresh liquid medium (liquid photocuring-type resin) and the exposure and curing (by the main scan of a laser beam) of the supplied liquid medium are executed in parallel at approximately the same time. In this apparatus the container is moved to execute a sub-scan in a direction perpendicular to the main scan of the laser beam. The liquid medium is dispensed through an array of apertures extending in the direction of the main scan of the laser beam.

In the prior art, the liquid medium dispensed over the surface of the last-solidified layer is added to the liquid medium already in the container, the container being lowered for receiving this fresh addition of the medium.

In accordance with the present invention it is proposed that
the liquid medium dispensed from above said surface is obtained by withdrawing a quantity of said liquid medium from said container, and said
coating of the surface of a last-solidified layer and said applying of said prescribed energy are alternately repeated in the formtion of said successively selectively solidified layers.

In accordance with the present invention there is further proposed an apparatus as defined in claim 23. Particular embodiments of the invention are the subject of the dependent claims.

In the embodiments described below the quantity of liquid medium withdrawn from the container is a known, metered, quantity and a known, metered, quantity is supplied to the dispenser. The withdrawing and feeding of the liquid medium may be done by means of a metering pump. Furthermore in the embodiments described below, the dispenser is moved with respect to the container, for example by traversing the dispenser between opposite sides of the container.

The invention is applicable to a method of and apparatus for forming a solid three-dimensional article from a liquid medium capable of solidification when subjected to prescribed energy, wherein by way of illustration, a fixed support may be provided in a container for holding the liquid medium. A layer of the liquid medium in the container then is produced above the fixed support, and a preselected cross-section of the layer is solidified by exposing at least a portion of the layer to prescribed energy in accordance with a design for the three-dimensional article. The liquid medium layer-producing and solidifying steps then are repeated, as necessary, to form the solid three-dimensional article. Each layer of the liquid medium is produced either partially, or entirely, by dispensing the liquid medium from above the support.

For example, in one embodiment in accordance with the invention, a first incremental layer of the liquid medium is initially coated on a support. A preselected cross-section of the first incremental layer of the liquid medium then is solidified by exposing at least a portion of the layer to prescribed energy, to form a first cross-section of the solid three-dimensional article. The level of the liquid medium surrounding the solidified first cross-section then is raised so as to form a meniscus around the periphery of the first cross-section. Next, the solidified first cross-section is coated with a second incremental layer of the liquid medium, so that the meniscus surrounding the solidified cross-section is broken and the second incremental layer of the liquid medium and the liquid medium surrounding the second cross-section flow together. This is followed by solidifying a second preselected cross-section of the liquid medium by exposing the liquid medium to prescribed energy, to form a second cross-section of the solid three-dimensional article. Thereafter, the liquid medium level raising, liquid medium coating and liquid medium solidifying operations, are repeated, as necessary, to complete the three-dimensional article.

In another embodiment in accordance with invention, each layer of the liquid medium is produced above a fixed support in the container for holding the liquid medium, by dispensing the entire layer from above the fixed support in the container, across the entire width of the container. A preselected cross-section of the layer then is solidified by exposing at least a portion of the layer to prescribed energy in accordance with a design for the three-dimensional article. The liquid medium layer-producing and solidifying steps then are repeated, as necessary, to form the solid three-dimensional article.

More specifically, the coating of the first incremental layer on the support and the subsequent liquid medium coating steps in the alternative embodiment, may be performed by spraying or another type of dispensing operation, while the solidifying steps are performed by lasering, using a laser beam which may be controlled by an RF laser beam modulator. The liquid medium is held in the container, and the support for the solid three-dimensional article as it is formed, is of apertured construction and removably mounted in a fixed position in the container. One type of coating mechanism may be in the form of an elongated apertured tube, which has aperture-closing pins selectively operated by solenoids, or which has rows of small dispensing apertures of a size such that the liquid medium flows therefrom only under pressure. The apertured tube also may be positioned closely adjacent the previously coated layer so that the liquid medium is dispensed from the tube in a uniform, controlled manner by capillary action and surface tension. In the alternative, the coating mechanism may be in the form of an outer elongated cylinder and an inner elongated cylinder mounted in relatively rotatable coaxial relationship, with each cylinder including an elongated slot, and with a mechanism for causing relative rotation between the cylinders to cause relative movement of the elongated slots between a non-aligned closed relationship and an aligned coating relationship.

Further, the liquid medium is fed to the coating mechanism by a mechanism for withdrawing liquid medium from a lower portion of the container or a separate lower container, and feeding the liquid medium to the coating mechanism. The withdrawing-and-feeding mechanism may include a double acting piston in a cylinder and include valves for controlling flow of the liquid medium to and from the piston and cylinder, or may be a digital metering pump. The coating mechanism may be mounted for horizontal reciprocating movement above the support by a gear rack or ball screw mechanism and associated drive, or may be mounted for oscillating swinging movement above the support. Raising of the liquid level in the container in the first embodiment may be accomplished by an expandable member, such as a bellows in the bottom portion of the associated container and operable in response to fluid pressure, and the solidifying mechanism and the coating mechanism in both of the embodiments may be mounted for vertical movement relative to the article support.

The invention and its practice will now be further described with reference to embodiments illustrated in the accompanying drawings, in which:
Figure 1 is an isometric, schematic view of a first embodiment of an apparatus for forming a solid three-dimensional article from a liquid medium in accordance with the invention;
Figure 2 is a plan view of the apparatus shown in Figure 1, with certain parts omitted or partially broken away;
Figure 3 is an enlarged isometric view of a coating mechanism of the apparatus shown in Figure 1, for applying successive coatings of the liquid medium in the forming of the solid three-dimensional article;
Figure 4 is an isometric view, similar to Figure 1, showing an alternate form of coating mechanism to that shown in Figures 1-3;
Figure 5A is an enlarged, schematic, partial view of an apertured spray tube-type coating mechanism as shown in Figure 3;
Figure 5B is a cross-sectional view taken along the lines 5B-5B in Figure 5A;
Figure 5C is an enlarged, schematic, partial view of an alternate spray tube construction;
Figure 5D is a cross-sectional view taken along the line 5D-5D in Figure 5C;
Figure 6 is an enlarged, schematic, partial view of a slot-type coating mechanism;
Figures 7A and 7B are schematic cross-sectional views taken along the line 7-7 in Figure 6 showing different operating conditions;
Figures 8 through 13 are elevational schematic views illustrating a sequence of steps in the forming of the solid three-dimensional article, in accordance with the first embodiment of the invention;
Figure 14 is a block diagram further illustrating the sequence of steps shown in Figures 8 through 13;
Figure 15 is a schematic illustration of an optics system which may be used in practicing the invention;
Figure 16 is a block diagram of a system for carrying out the invention;
Figure 17 is a flow chart illustrating a sequence of programming steps utilized in carrying out the first embodiment of the invention;
Figures 18A and 18B are isometric views of solid three-dimensional articles illustrating various types of shapes which may be formed utilizing the subject invention;
Figure 19 is a schematic front elevational view of a second embodiment of the invention;
Figures 20 through 24 are elevational schematic views similar to Figure 19, illustrating a sequence of steps in the forming of a solid three-dimensional article, in accordance with the second embodiment of the invention, but with a vertical central portion of the apparatus turned 90° and shown as viewed along the line 20-20 in Figure 19;
Figure 25 is an isometric view of a modified type of liquid medium coating mechanism which may be used in the second embodiment of the invention shown in Figures 19-24;
Figure 26 is a view of the bottom of a liquid medium dispensing tube of the coating mechanism shown in Figure 25, as seen along the line 26-26;
Figure 27 is an enlarged schematic view illustrating a mode of operation of the liquid medium dispensing tube of the coating mechanism shown in Figures 25 and 26;
Figure 28 is a schematic view illustrating the path of a laser beam in solidifying a cross-sectional layer of the liquid medium;
Figures 29A and 29B are elevational views of articles each having a downwardly facing surface, illustrating a laser beam offset feature of the invention;
Figures 30A, B, C and D are schematic views illustrating an article curved surface interpolation feature of the invention.

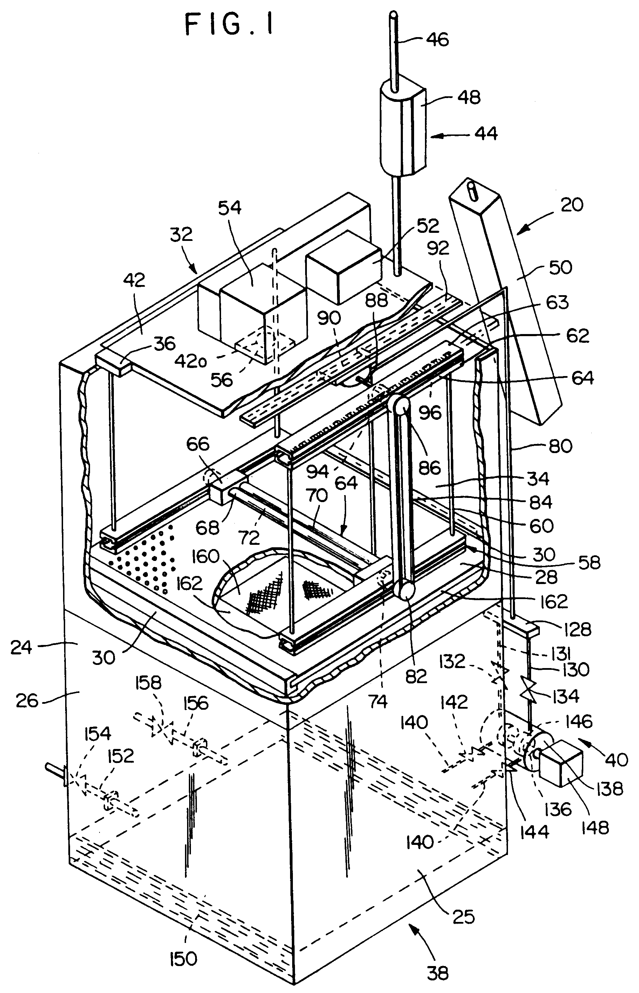

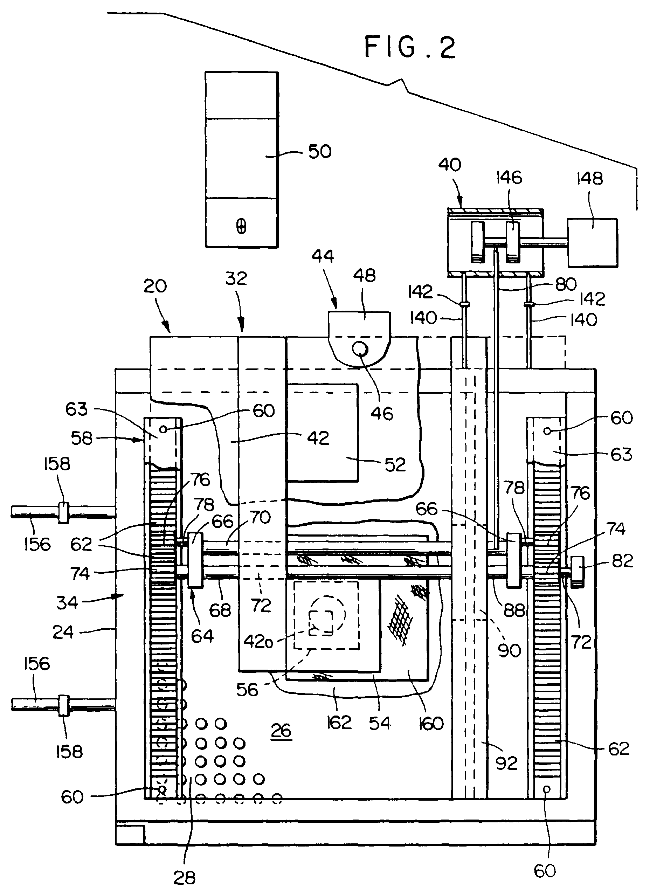

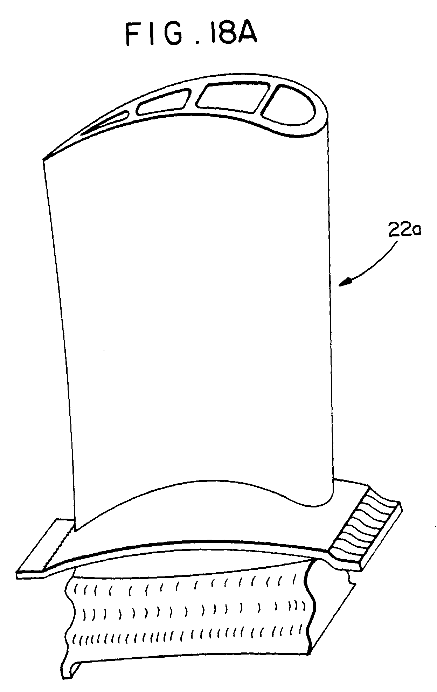

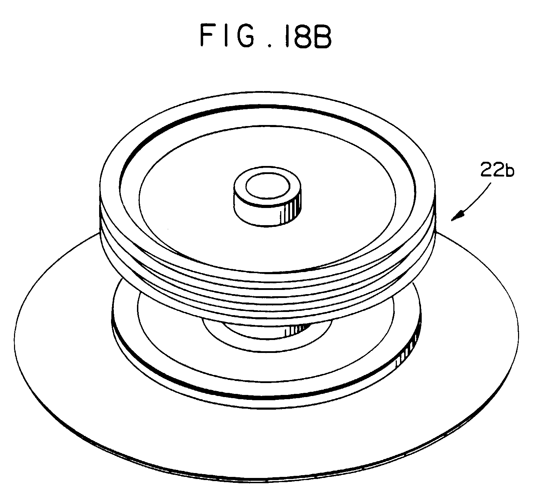

Referring to the embodiment of the invention shown in Figures 1 and 2, an apparatus 20 in accordance with the invention, for forming solid three-dimensional articles or parts, such as a turbine blade 22a, as illustrated in Figure 18A, or a jet fuel swirler 22b, as illustrated in Figure 18B, is disclosed. The apparatus 20 includes a container or tank 24, having a lower sump portion 25 (Figure 1), for holding a liquid medium 26. The container 24 includes a horizontally disposed apertured support plate member 28, for supporting the article 22 being formed during a forming operation. The support plate member 28 is removably mounted (through a door, not shown) in the container 24 in a fixed position against vertical movement, at an intermediate level, such as by having peripheral edge portions received in slotted guide members 30 (Figure 1) fixed to the container interior walls. The apparatus 20 further includes a vertically movable energy scanning mechanism or system 32 for solidifying successive preselected cross-sections of the liquid medium 26, to form one of the articles 22. A liquid medium coating mechanism 34 and a liquid medium level sensor 36 (Figure 1) of a laser beam-emitting type, which is responsive to reflected laser light from the surface of the liquid medium 26, are mounted on the vertically movable scanning mechanism 32. As is shown in Figure 1, a liquid medium level raising mechanism 38 is provided in the bottom of the container 24, and a liquid medium withdrawal-and-feeding mechanism 40 also is provided adjacent the lower end of the container exteriorly thereof.

The vertically movable scanning mechanism 32 comprises a horizontal support plate 42 which is connected to a vertical traversing mechanism 44, such as a screw-threaded member 46 driven vertically by a reversible motor 48, for raising and lowering the scanning mechanism. A source of energy, such as a laser 50, a laser beam focusing optics system 52 and a scanner head 54, for directing the laser beam energy to solidify successive layers of the liquid medium 26, are all also mounted on the support plate 42 in a suitable manner. The horizontally disposed support plate 42 has an opening 42o formed therein beneath the scanner head 54, and is provided on its underside with a shutter 56 which is movable to an open position for a scanning operation, and movable to a closed position during the liquid medium coating operation, to prevent extraneous liquid medium from contaminating the optics system 52. For example, the shutter 56 may be secured to one end of a pivoted lever (not shown) pivotably connected at its opposite end to a solenoid (not shown) mounted beneath the support plate 42.

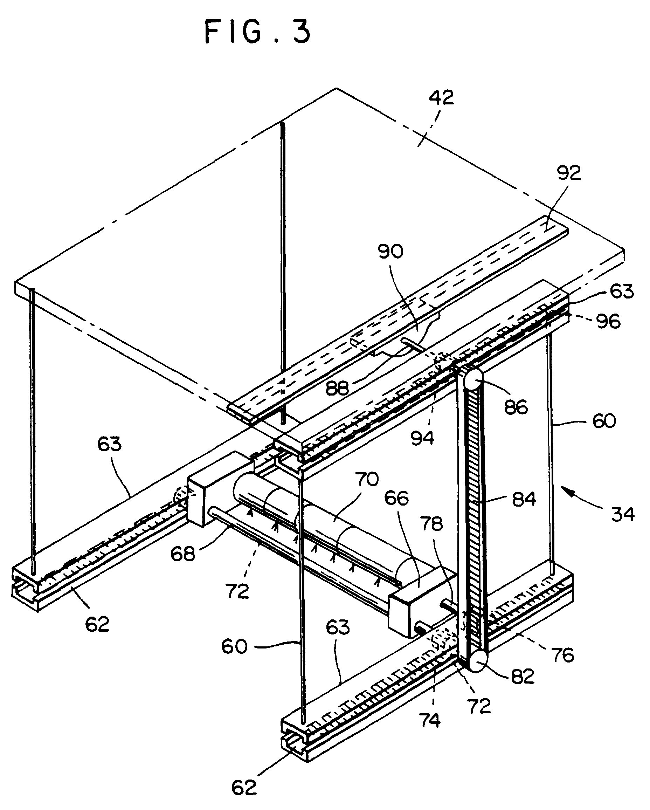

Referring to Figures 1 and 2, the liquid medium coating mechanism 34 may comprise a sub-frame 58 suspended beneath the horizontal plate 42. The sub-frame 58 includes a plurality of depending vertical legs 60 at each corner of the support plate 42, and horizontally disposed gear racks 62 and respective opposed guide members 63 connected between lower ends of respective ones of the vertical legs. The coating mechanism 34 further includes a coating carriage 64 of rectangular rigid construction, comprising opposite end plates 66, a drive shaft-enclosing tube 68 defining one longitudinal side of the carriage, and a liquid medium dispensing mechanism in the form of a spray tube 70 defining the opposite longitudinal side. The carriage 64 extends between the gear racks 62 and guide members 63 and further includes a drive shaft 72 journaled in the end plates 66 and having drive pinion gears 74 fixed thereto adjacent its opposite ends. The pinion gears 74 are disposed between respective ones of the opposed gear racks 62 and guide members 63, which thus guide the coating carriage 64 for horizontal movement therebetween. An idler pinion gear 76 (best shown in Figures 2 and 3) is rotatably mounted on a stub shaft 78 projecting from each end plate 66 and also is disposed between the adjacent gear racks 62 and guide members 63, to maintain the coating carriage 64 against rotation about the drive shaft 72, during the horizontal movement of the spray tube 70. The liquid medium 26 is fed into the spray tube 70 via a flexible line 80.

As is best shown in Figure 3, an extended portion of the drive shaft 72 has a drive pulley 82 fixed thereto and connected by a timing belt 84 to a pulley 86 secured to a drive shaft 88 of a small reversible motor 90 mounted for sliding movement on a dove-tail guide 92 secured to the underside of the horizontally disposed support plate 42. The drive shaft 88 of the motor 90 also has a pinion gear 94 secured thereon and engageable with a horizontally disposed gear rack 96 extending between and fixedly connected to adjacent ones of the vertical legs 60 below the horizontal plate member 42. Accordingly, during a liquid medium coating operation, rotation of the motor 90 causes it to drive itself along its guide 92 by engagement of its drive pinion gear 94 with the gear rack 96, while at the same time, causing the coating carriage 64 to be driven along the lower gear racks 62 by means of the timing belt 84, and the pulley 82 and pinion gears 74 on the coating carriage 64.

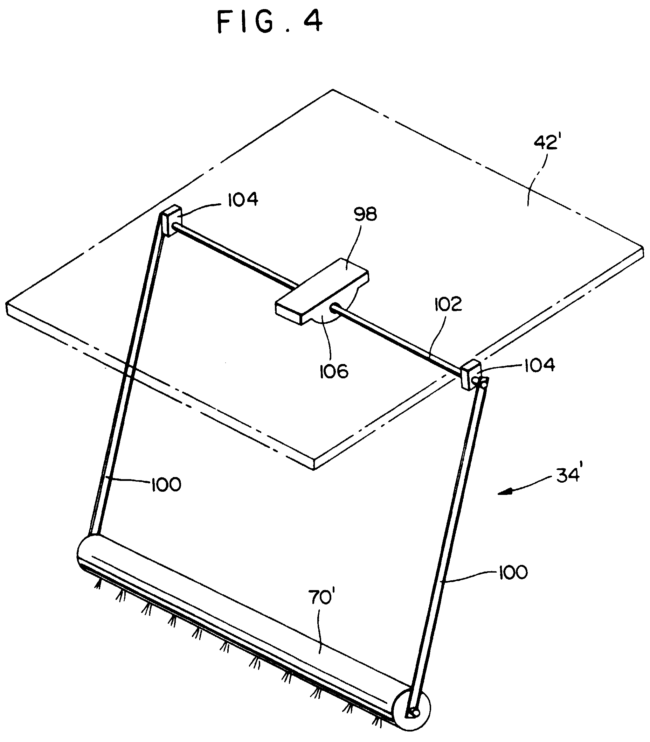

Figure 4 discloses an alternative embodiment of the coating mechanism of the invention in which a cylindrical spray tube 70' of a coating mechanism 34' is mounted beneath a horizontal support plate 42' by a pendulum-type oscillating mounting 98. In this embodiment, opposite ends of the spray tube 70' are secured to a pair of horizontally spaced vertically depending legs 100 secured at their upper ends to a horizontal rotatable shaft 102 mounted in suitable bearings 104 secured to the underside of the horizontal support plate 42'. The rotatable shaft 102 forms a drive shaft of a small reversible motor 106 fixedly mounted on the underside of the horizontal support plate 42'. Thus, by operating the motor 106 through a preselected angle, such as 40°, the spray tube 70' can be moved along an arc for spraying liquid medium 26 toward an apertured article support plate (not shown in Figure 4) in a liquid medium-coating operation.

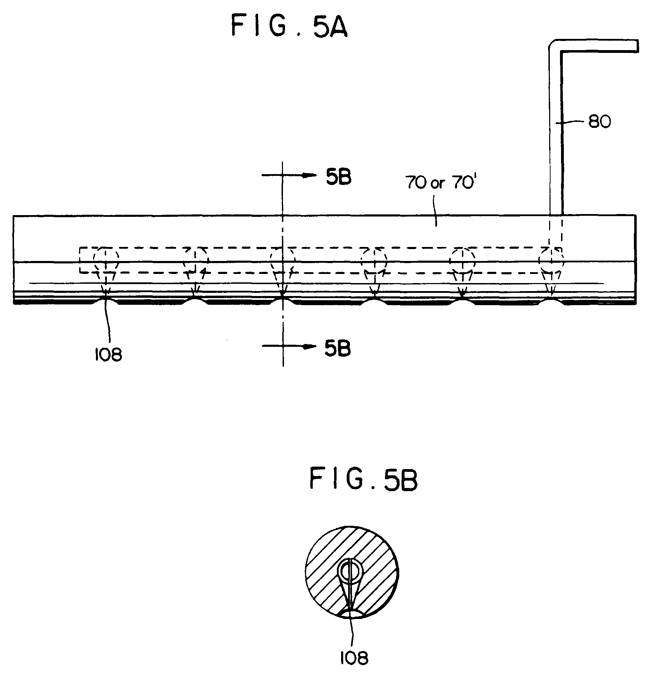

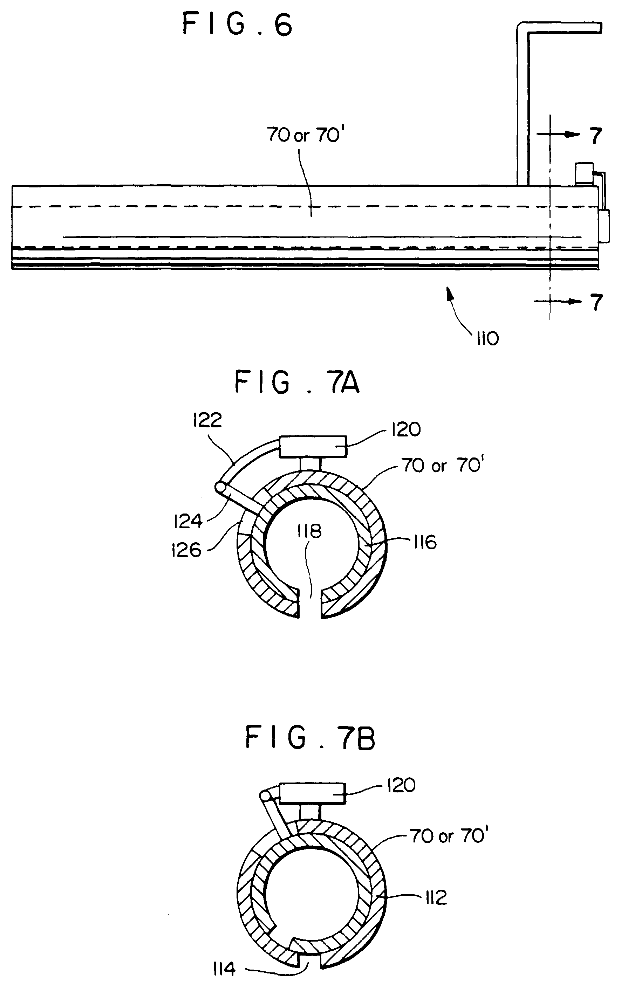

As is illustrated in Figures 5A and 5B, each of the spray tubes 70 or 70' may include a row of spraying apertures 108 extending along a lower portion thereof, with the liquid medium flexible inlet tube 80 connected to the spray tube adjacent one end thereof. In the alternative, referring to Figures 6, 7A and 7B, each of the spray tubes 70 or 70' may be in the form of a cylinder assembly 110 comprising an outer cylinder 112 provided with an elongated slot 114, and an inner cylinder 116 also provided with an elongated slot 118. The inner cylinder 116 is rotatable relative to the outer cylinder 112 between a position in which the elongated slots 114 and 118 in the cylinders are aligned, as shown in Figure 7A, for a spraying operation, and a relative position in which the slots are in a non-aligned closed position, as shown in Figure 7B. For this purpose, a small solenoid 120 is fixedly mounted on the outer cylinder 112 and has an arc-shaped plunger 122 pivotally connected to an outer end of a lug 124 secured at its inner end to the inner cylinder 116, with the lug disposed for limited circumferential movement in a circumferentially extending slot 126 in the outer cylinder.

Referring again to Figure 1, the liquid medium 26 for a liquid medium coating operation is provided to the spray tube 70 by the liquid medium withdrawing-and-feeding mechanism 40. For this purpose, as is illustrated by the spray tube inlet line 80, the inlet line is connected to a manifold 128, in turn connected by feed lines 130 and 131 and respective control valves 132 and 134 to a double acting piston-and-cylinder mechanism 136. A cylinder 138 of the double acting piston-and-cylinder mechanism 136 is connected by additional feed lines 140, through control valves 142 and 144, to the liquid medium sump portion 25 adjacent the bottom of the liquid medium container 24. A double acting piston 146 of the piston-and-cylinder mechanism 136 is reciprocated by a solenoid 148, so that, upon selective operation of the valves 132, 134, 142 and 144, when the piston is moved in one direction (e.g., to the left in Figure 1) with the valves 132 and 144 open and the valves 134 and 142 closed, the liquid medium 26 in the cylinder 138 will be forced from the cylinder through the valve 132, the feed line 131, the manifold 128 and the inlet tube 80 to the spray tube 70. At the same time, with the valve 144 open and the valve 134 closed, additional liquid medium 26 will be withdrawn from the sump portion of the container 24 into the opposite end of the cylinder 138. Then, upon a next liquid medium coating operation, when the solenoid 148 is operated to move the piston 136 in the opposite direction (i.e., to the right in Figure 1), with the valves 134 and 142 open and the valves 132 and 144 closed, the liquid medium 26 which was withdrawn into the cylinder 138 on the previous coating operation, will be fed from the cylinder through the valve 134, the feed line 130, the manifold 128 and the inlet tube 80, to the spray tube 70.

With further reference to Figure 1, the liquid level raising mechanism 38 comprises an expandable member, such as a bellows 150, disposed in the bottom of the liquid medium container 24. One end of the bellows 150 is connected by an inlet line 152 extending through a lower wall portion of the container 24, and a control valve 154, to a fluid pressure source, such as air or water, not shown. Accordingly, when the control valve 154 is opened, the bellows 150 is expanded by the fluid pressure an incremental amount in order to raise the level of the liquid medium 26 in the container 24 a corresponding incremental amount (e.g., 0.0017" to .020") above the upper surface of the apertured article support plate 28 in the container for an article layer forming operation. For this purpose, the liquid medium level sensor 36 on the vertically movable scanning mechanism 32, operates when the desired liquid medium incremental level above the surface of the support plate 28 has been reached, to cause closing of the bellows control valve 154. This expansion of the bellows 150 is repeated for subsequent article layer forming operations until forming of the article 22a, b has been completed and the upper surface of the bellows has reached an upper level. A drain line 156 with a valve 158, which also is connected to the bellows 150, then may be opened to drain the expansion fluid therefrom, whereupon the bellows returns to its original un-expanded condition, as shown in solid lines in Figure 1, and the liquid medium 26 in the container 24 is returned to its original lower position. During this liquid level returning operation, any extraneous solidified material in the article-forming upper portion of the container 24 is removed by a filter 160 disposed in a horizontal plate 162 secured to the interior walls of the container.

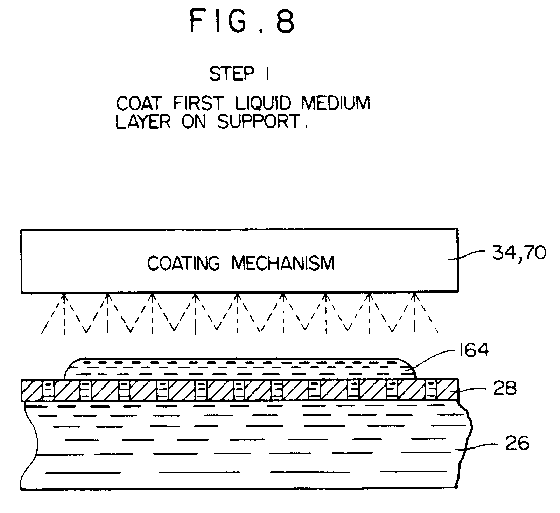

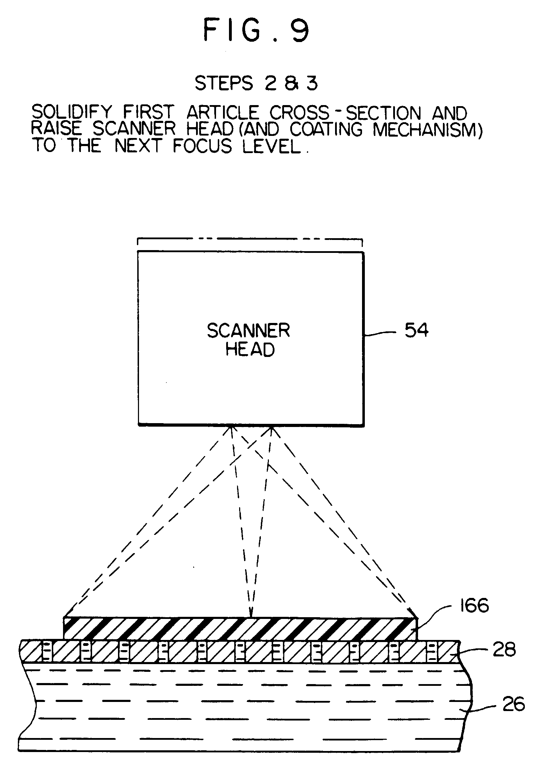

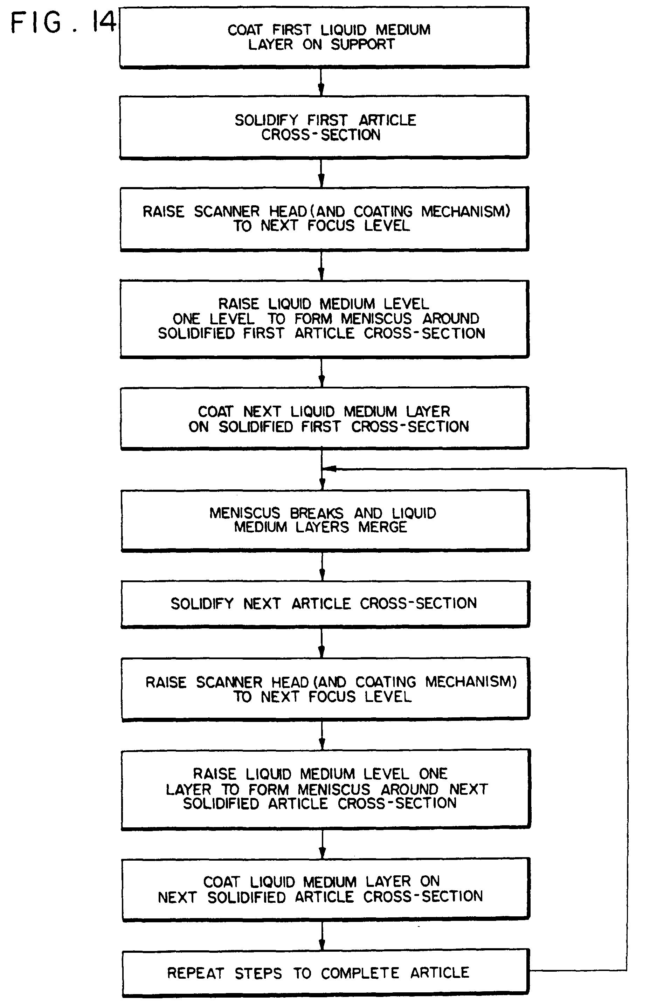

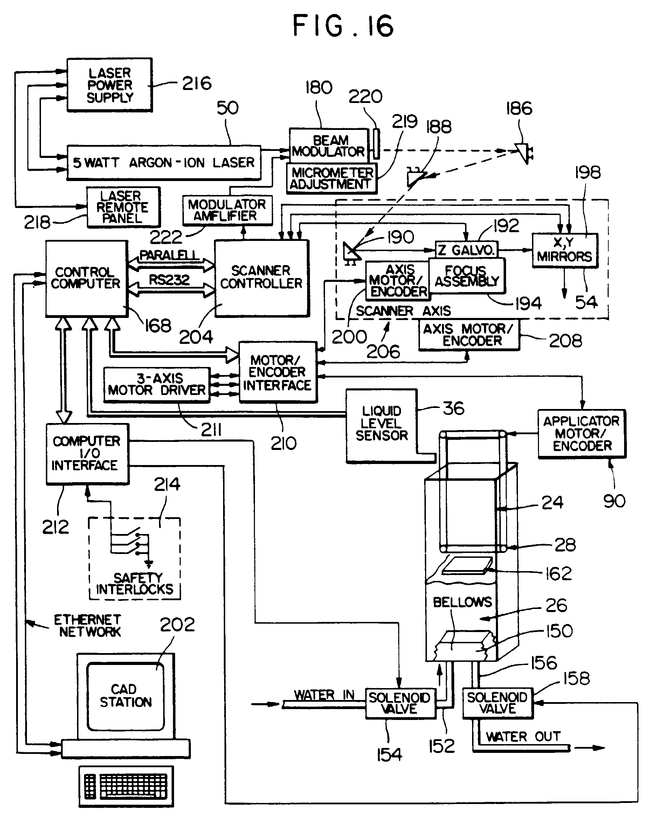

Figures 8-13 are schematic illustrations depicting a series of steps in carrying out the method of the invention, and Figure 14 is a block diagram summarizing the steps illustrated in Figures 8-13. With reference to Figure 8, initially, a first layer 164 of the liquid medium 26 is applied to the apertured fixed support plate 28 in the container 24 from above the fixed support plate, by way of example, by spraying from the spray-coating tube 70. Referring to Figure 9, a preselected cross-section or profile 166 of the initial liquid medium layer 164, in accordance with a design of the solid three-dimensional article being formed, then is solidified by the scanner head 54 applying the laser beam energy from the laser 50 to the liquid medium layer under the direction of a computer 168 (Figure 16). After the preselected cross-section 166 of the liquid medium layer 164 has been solidified, the scanning mechanism 32, including the scanner head 54-coating mechanism 34, is moved vertically an increment corresponding to the thickness of the next layer to be solidified, (e.g., 0.0017" to 0.020") as illustrated by the phantom line in Figure 9.

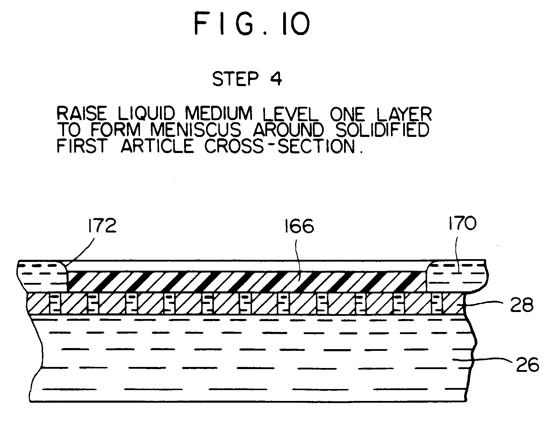

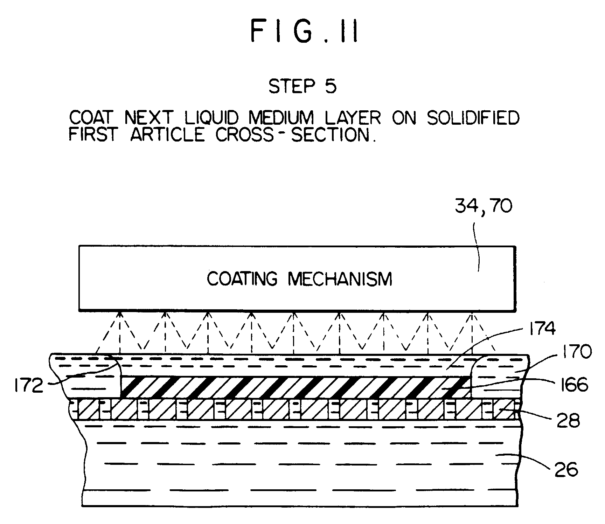

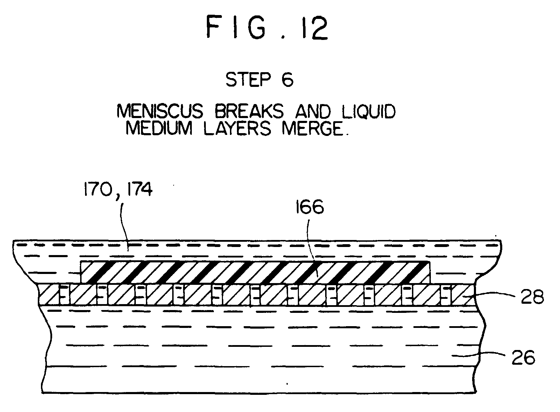

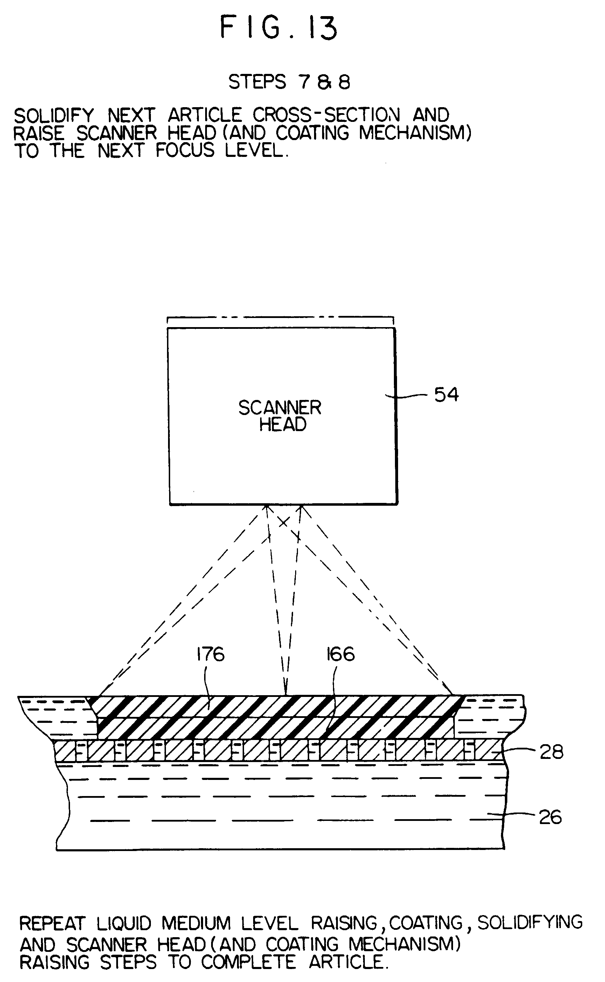

Referring to Figures 1 and 10, the fluid inlet valve 154 (Figure 1) to the bellows 150 then is opened under the direction of the computer 168, to cause an initial incremental expansion of the bellows, to raise the level of the liquid medium 26 in the container 24 upward through the apertures in the article support plate 28, the preselected increment (e.g., 0.0017" to .020") above the previously solidified article cross-section 166, so that the surface tension of the thus-formed elevated layer 170 of the liquid medium 26 forms a meniscus 172 around the perimeter of the previously solidified article cross-section, without the liquid medium flowing over the upper surface of the solidified cross-section. Referring to Figure 11, the upper surface of the initial solidified cross-section 166 of the article then is spray-coated by the spray tube 70 from above the fixed support 28 in the container 24, to fill the recess formed by the meniscus 172 above the upper surface of the solidified article cross-section, with an additional layer 174 of the liquid medium 26. The spraying operation causes the meniscus 172 surrounding the article cross-section 166 to break, whereby the layers 170 and 174 of liquid medium 26 merge, an illustrated in Figure 12, thus completing the raising of the liquid level in the container 24 by a one-layer increment. With reference to Figure 13, the scanner head 54 then is again operated to solidify another preselected cross-section or profile 176 of the article 22 being formed, under the direction of the computer 168, to form the next layer of the article. The liquid medium level raising step, liquid medium coating-and-meniscus breaking step, liquid medium solidifying step and scanner head-coating mechanism raising step, as represented by the steps 4, 5, 6, 7 and 8, and depicted in Figures 10, 11, 12 and 13, then are repeated, as necessary, until formation of the article 22a, b is completed.

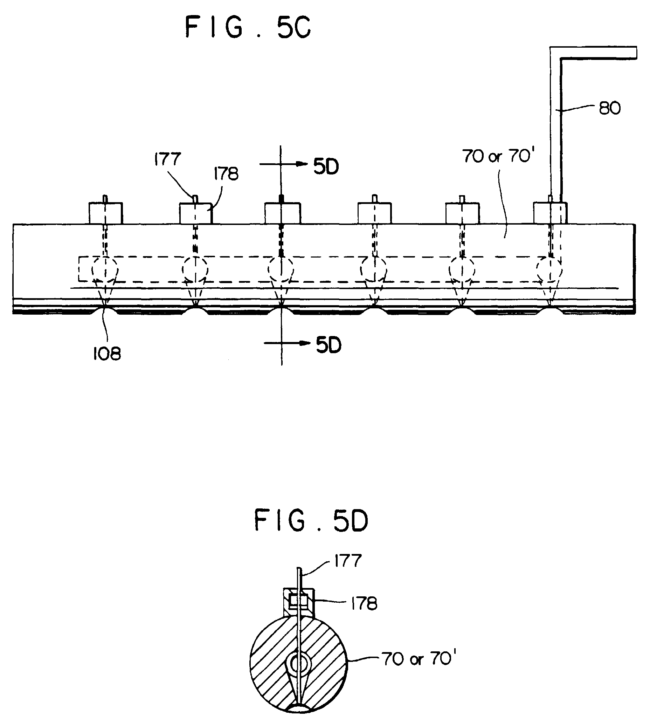

In coating each of the solidified layers 166 and 176 of the liquid medium 26, it has been found that overspray of the liquid medium beyond the meniscus 172 onto the existing liquid medium, generally does not appear to produce a significant tolerance error in the finished article 22a, b. While the reasons for this are not fully understood, it is believed to be due, at least in part, to the thinness of the liquid medium layers 166 and 176 involved. However, where tolerance variations are found to be a problem in any particular instance, a modified spray tube, as shorn in Figures 5C and 5D may be used. In this embodiment, each spray aperture 108 is provided with a separate control pin 177 operated by a solenoid 178. Thus, by programming the computer 168 to control the solenoids 178 so that the spray tube 70 or 70' begins spraying only at one extreme end portion of a meniscus, sprays only those areas within the confines of the meniscus during travel of the spray tube, and stops spraying at an opposite extreme end portion of the meniscus, closer tolerances can be obtained. The coating tube 70 or 70' of Figures 6, 7A and 7B may be used in a similar manner by dividing the inner cylinder 116 into relatively movable sections and providing each section with a respective control solenoid 120.

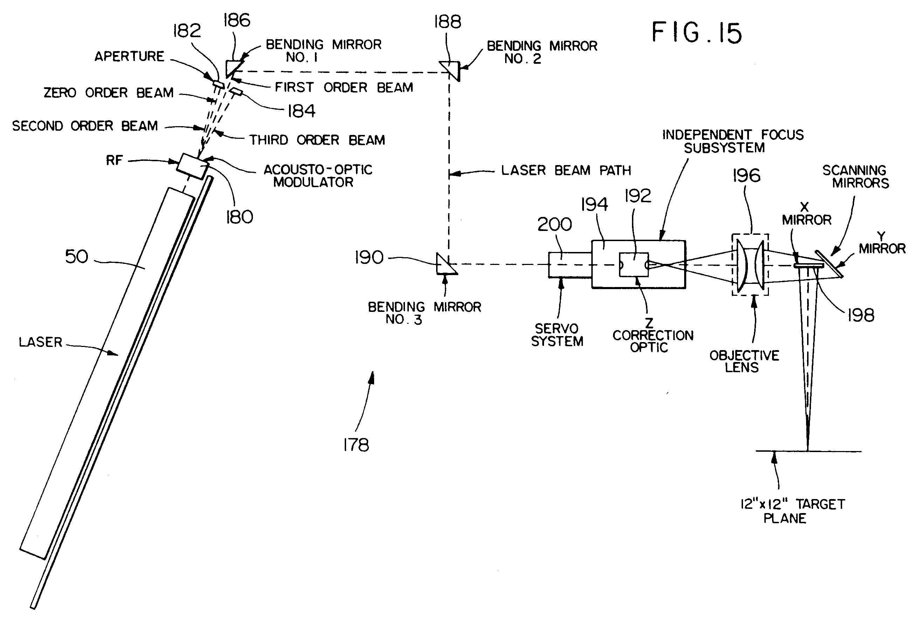

Figure 15 discloses an optic system 178 which may be used in practicing the invention. The laser beam of the laser 50 is directed through an RF acousto-optic beam modulator 180 in the form of a rotatable piezoelectric crystal which splits the beam into several orders of magnitude and which can be used as a beam shutter in a known manner. More specifically, when the modulator 180 is de-energized, the loser beam of the laser 50, which may pals from the modulator through a suitable bending mirror (not shown), strikes a portion of a blocking member 184 in a manner not illustrated. When the modulator 180 then is energized by an RF signal from an RF generator (not shown), the crystal splits the beam into several orders of magnitude, the zero, second and third orders of which still strike the blocking member 184, as illustrated in Figure 15. A first order beam , however, having an intensity on the order of 85% of the laser output, then passes through an aperture 182 in the blocking member 184 to a series of three (or more) bending mirrors 186, 188 and 190, and through an adjustably movable Z-axis correction focusing lens 192 on a reciprocal carriage 194, and an objective lens 196, to X and Y scanning mirrors 198 of the scanner head 54, which direct the beam so that it scans across the layer of liquid medium to be solidified. For this purpose, the correction lens 192 is focused so that a preselected diameter of the laser beam impinges upon the liquid medium layer, and the computer 168 is programmed to vary the position of the carriage 194, and thus the focusing lens 192, by a suitable servosystem (axis motor/encoder) 200, "on the fly", during the solidification operation, so that the impinging diameter of the laser beam remains constant as the beam is directed toward the liquid medium at a direction other than perpendicular, as for example, disclosed in U.S. Patents Nos. 4,797,749 and 4,816,920 of D.R. Paulsen, and assigned to General Scanning, Inc., of Watertown Mass.

Referring to the block diagram of Figure 16, it is seen that apparatus for practicing the invention includes a CAD station 202 which is connected by an ethernet network to the control computer 168 in a known manner. The computer 168 is connected through a scanner controller 204 to a scanner head access system 206 including an axis motor/encoder 208, the Z-axis galvanometer 192, the X and Y mirrors 198 of the scanner head 54, and the focusing assembly 194. The computer 168 is also connected to the applicator motor/encoder 90, for the liquid medium applicator (coater mechanism) 34, through a motor/encoder interface 210 having a 3-axis motor driver 211 connected thereto, and is also connected to the focus servosystem (axis motor/encoder) 200, and scanner axis motor/encoder 208. The solenoid valve 154 for controlling fluid input to the bellows 150, and the drain valve 158 for the bellows, also are controlled by the computer 168 through a computer I/O interface 212, with safety interlocks 214 (e.g., open door, etc.) also connected to the computer 168 through the computer I/O interface.

With further reference to Figure 16, the laser 50 is connected to an associated power supply 216, in turn connected to a control panel 218 in a known manner. The beam of the laser 50 is directed therefrom to the beam modulator 180 having a linear and rotary micrometer adjustment system 219 and a mechanical safety shutter 220. The micrometer adjustment system 219 of the beam modulator 180 is utilized to select and direct the first order portion of the laser beam to the first bending mirror 186, as shown in Figure 15 and previously described, from which the laser beam passes to the second and third bending mirrors 188 and 190, and then to the Z-axis galvanometer 192 of the focusing assembly 194, and to the scanner head X, Y mirrors 198 for a scanning (liquid medium solidifying) operation. The laser beam modulator 180 also is connected to a modulator amplifier 222 which receives signals from the scanner controller 204.

The control equipment as disclosed in Figure 16 is of a type which is generally known in the art. For example, the computer 168 may be the model "Smart Micro 386/120" or "Smart Micro 486/120" available from Microsmart, Inc. of Ashland, Mass. The CAD station 202 may be obtained from Sun Microsystems of Mountain View California, under the trademark "Sparkstation", and software may be obtained from Structure Dynamics Research Corporation of Cincinnati, Ohio as their "Ideas for Design". Similarly, the laser 50 may be the 5 watt argon-ion laser sold by Coherent, Inc. of Mountain View, California as their model "I-70" (a visible light laser); the scanner head 54 may be obtained from General Scanning, Inc. of Watertown, Mass.; the laser sensor 36 may be that sold by Namco Controls of Mentor, Ohio, under the trademark "Lasernet®"; and the RF beam modulator 189 may be the Model No. N30085-30 available from Newport Electro-Optics Systems of Melbourne, Florida.

The liquid medium 26 may be of any suitable type capable of being solidified when subjected to energy, such as a laser beam. For example, the liquid medium may be a UV polymer acrolite thermoset photosensitive plastic resin, such as that available from DSM Desotech, Inc. (formerly DeSoto, Inc.) of Chicago, Illinois under the trademark "Desolite®", or a suitable ceramic liquid. However, it has been found preferable to use as the liquid medium a polymer resin sensitive to visible laser light (e.g., 400 to 700nm), which is also available from DSM Desotech Inc. as their composition No. 4057-16. The use of a visible light photo-hardenable polymer in combination with a visible light laser provides significant advantages over other systems, for example, employing a UV light laser. The reason for this is believed to be that visible light lasers generally provide more energy and thus are able to achieve better solidification and definition in the hardened layer, more quickly. Other suitable materials, however, may also be apparent to those skilled in the art.

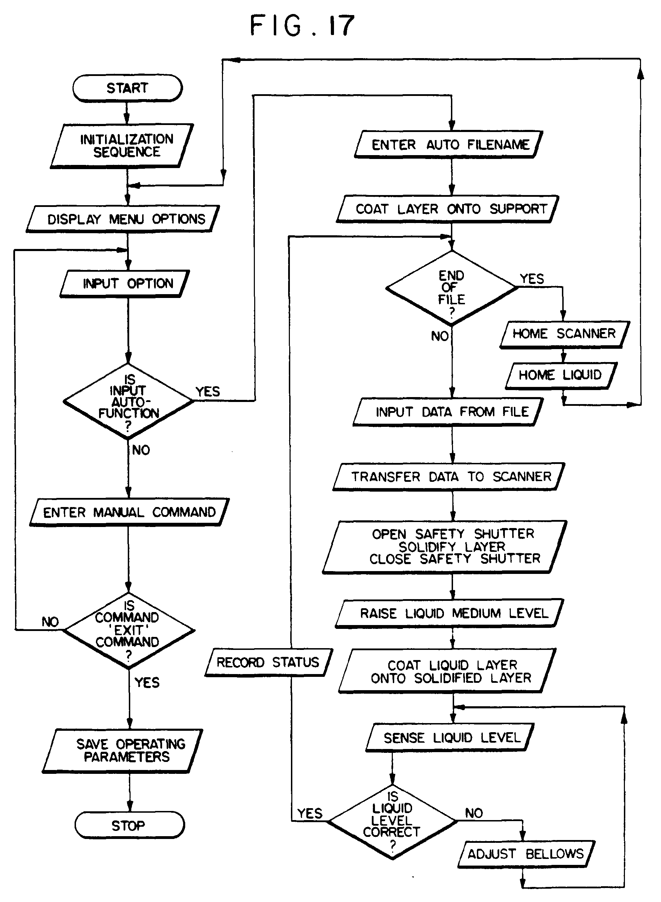

Figure 17 is a flow chart of a sequence of operations of the apparatus 20, in the forming of a solid three-dimensional article 22a, b from the liquid medium 26. At the beginning of a forming operation, the apparatus 20 proceeds through an initialization sequence, in which the computer 168 determines the then-existing position settings of the various units of the apparatus, applies power to all units, returns the units to their "home" positions, and calibrates the scanner system 32. (In the alternative, the units may be returned to their "home" positions manually by operation of a key on a keyboard (not shown) of the computer 168.) The computer 168 then displays the various available menu options and the operator selects one of the options. If the input option is not automatic, the operator then executes the desired manual command, such as "jog the scanner head up", whereupon, unless the command is an "exit" command, the computer 168 displays another input option for selection by the operator. If the command is an "exit" command, the computer 168 stores the positions of the various units of the system for the next operation, and the apparatus 20 is turned off.

If the input option selected by the operator is automatic, the computer 168 enters an automatic file name (e.g., the name of an article 22 to be formed) for processing. If the next cross-section or profile of the article 22 to be formed is other than the last cross-section, that is, the end of the file, the computer 168 then inputs information for the cross-section to be formed, and transfers the data to the scanning system 32. If a layer of the liquid medium 26 has been coated in a solidifying operation, the safety shutter 56 beneath the horizontal plate of scanning system 32 is opened and the cross-section of the article to be formed is scanned and solidified by the scanning system. After solidification of the cross-section has been completed and the safety shutter 56 has been closed, the scanning system 32 is raised one increment by the lift mechanism 44, and the bellows 150 is operated to expand an additional increment to raise the liquid medium level a desired amount, as sensed by the liquid medium level sensor 36, to form a meniscus 172 around the just-solidified profile as illustrated in Figure 10. If the liquid medium level sensor 36 does not operate, the bellows 150 is again operated an additional increment until operation of the liquid medium sensor occurs. The status of the forming operation, i.e., that the cross-section has been formed and that the system is ready to form the next cross-section, then is recorded in the computer 168, and the sequence of operations is repeated.

However, if the computer 168 determines that the last sequence of operations was the last cross-section for the article 22 being formed, i.e., the end of the file, the scanner system 32 is raised upward to its upper "home" position by the lift mechanism 44, and the drain valve 158 of the bellows 150 is opened by the computer 168 to permit the liquid medium 26 in the container 24 to be lowered to its "home" position, to permit access to the completed article 22a, b and removal thereof from the apertured support plate 28 in the container 24, as well as removal and/or cleaning of the support plate for the next article forming operation. The removed article 22, while of relatively rigid construction, then is subjected to final curing under one or more lamps at a post-curing station, not shown, in a known manner.

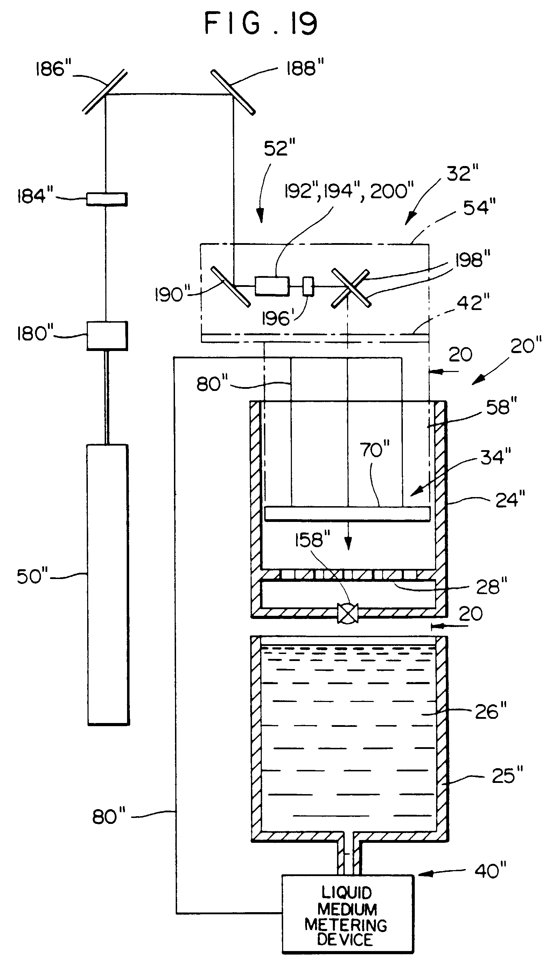

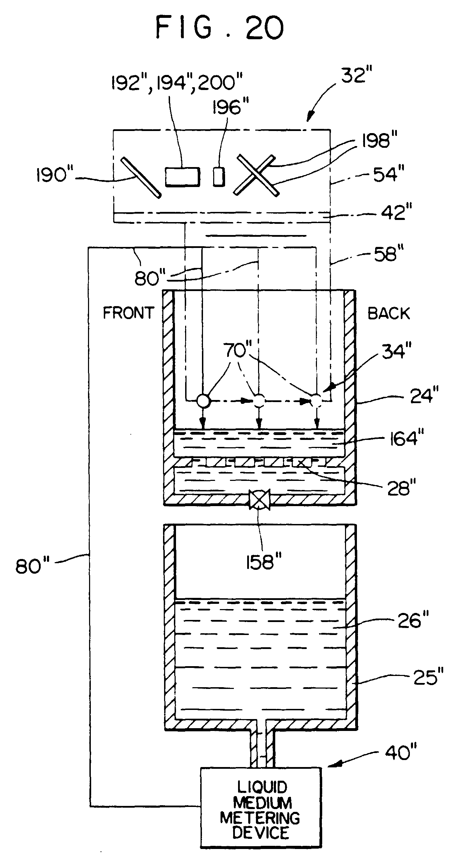

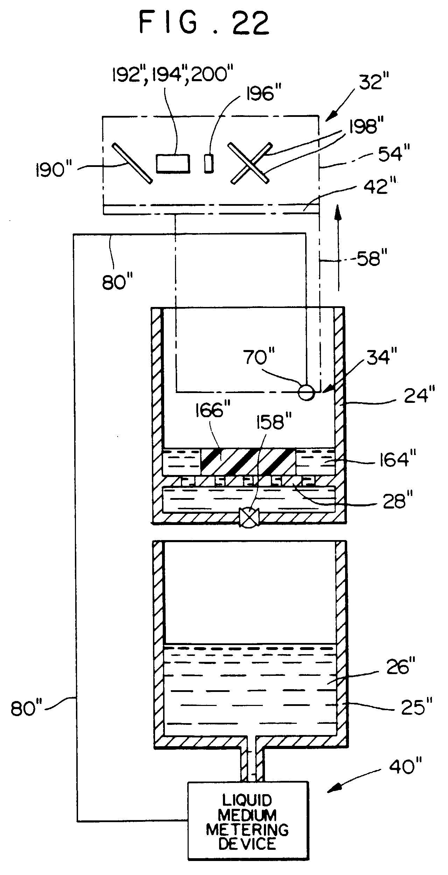

Referring to Figures 19-24, the structure and operation of the second embodiment of the invention is similar to that of the first embodiment of the invention, as illustrated in Figures 1-14. However, in this more preferred embodiment of the invention, a first liquid medium layer 164'' (Figures 20-22), and each subsequent liquid medium layer 170'', 174'' (Figure 22), is formed above an apertured fixed support plate member 28'' entirely from above the fixed support and across the entire width of a container 24'', by a liquid medium coating or dispensing mechanism 34''.

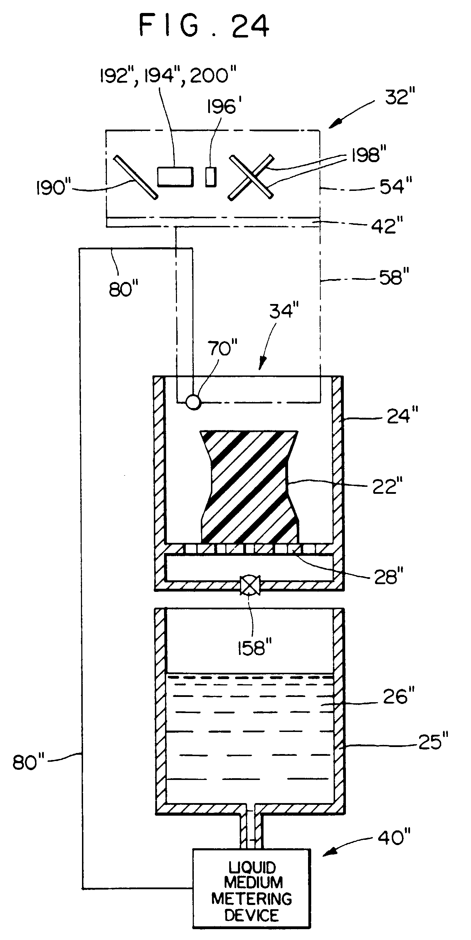

With further reference to Figure 19, an apparatus 20'' includes a vertically movable energy scanning mechanism or system 32'' for solidifying successive preselected cross-sections of a liquid medium 26'', to form an article 22'' (shown in Figure 24), and the liquid medium coating mechanism 34'' is mounted on the vertically movable scanning mechanism. A liquid medium metering device 40'' is provided adjacent the bottom of a lower liquid medium storage container 25'' (which corresponds to the liquid medium container sump portion 25 of the single container 24 in the first embodiment of the invention). The metering device 40'' may be in the form of the withdrawal-and-feeding mechanism 40 of the first embodiment of the invention and comprising parts corresponding to the parts 128-148 thereof, but preferably is a digital metering pump, such as that available from IVEK® of Springfield, Vermont as their "Digispense" Pump No. 130.8.

The vertically movable scanning mechanism 32'' comprises a horizontal support plate 42'' which is connected to a vertical traversing mechanism (not shown in Figures 19-24), such as the mechanism 44 in Figure 1, for raising and lowering the scanning mechanism. Similarly, as is shown in Figure 19, a source of energy, such as a laser 50'', a laser beam focusing optic system 52'' and a scanner head 54'', for directing the laser beam energy to solidify successive layers of the liquid medium 26'', are also mounted on the support plate 42'' in a suitable manner, as in the first embodiment of the invention.

In general, the liquid medium coating mechanism 34'' may comprise a sub-frame 58'' mounted beneath the horizontal support plate 42'', with a liquid medium spray or dispensing tube 70'' mounted on the subframe and extending across the width of the container 24'', as shown in Figure 19. The dispensing tube 70'' is supported on the subframe 58'' for reciprocable traversing movement from adjacent one side of the container 24'' to the other, as illustrated in Figures 20 and 22, for forming the sequential layers of the liquid medium in the container above the fixed support 28''. The liquid medium 26'' is fed into the dispensing tube 70'' by the resin metering device 40'', from the lower liquid medium storage container 25'' via a flexible line 80''.

With further reference to Figure 19, as in the first embodiment of the invention, the laser beam from the laser 50'' passes through a beam modulator 180'', which may be used in conjunction with a blocking member 184'', as a shutter, as previously described. Thus, when the beam modulator 180'' is energized (by an RF signal from an RF generator, not shown), a first order portion of the laser beam passes to bending mirrors 186'' and 188'', and then to a bending mirror 190'' of the scanning mechanism 32''. Within the scanning mechanism 32'', the laser beam then passes through an adjustably movable Z-axis correction focusing lens 192'' on a reciprocal carriage 194'', with the focusing lens and carriage being moved by a suitable servosystem 200'', "on the fly", during a solidification operation, so that the impinging diameter of the laser beam remains constant as the beam is directed toward a layer of the liquid medium 26'' at a direction other than perpendicular. The laser beam then passes through an objective lens 196'', to X and Y scanning mirrors 198'' of the scanner head 54'', which direct the beam so that it is traversed across the layer of liquid medium 26'' to be solidified.

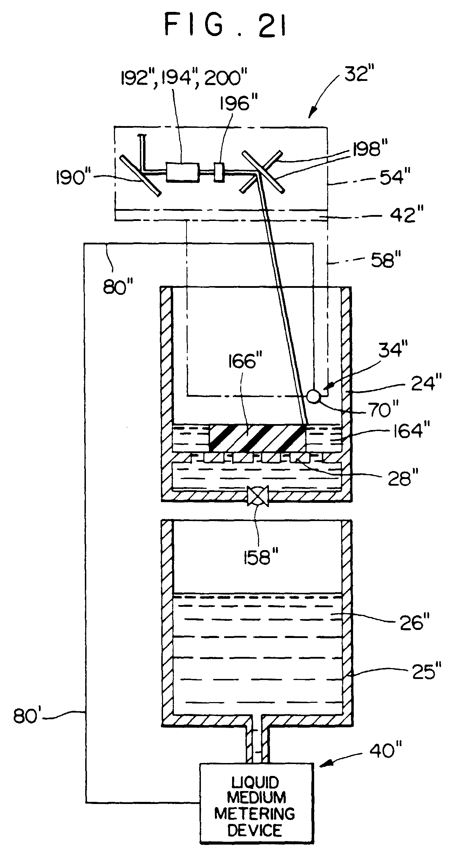

Referring now to Figure 20, this figure shows the central portion of the apparatus 20'' turned 90° from the showing in Figure 19, so that the front of the apparatus is at the left and the back of the apparatus is at the right in this figure. At the beginning of a laser modeling operation, a sufficient amount of the liquid medium 26'' is withdrawn from the container 25'' and introduced, via the flexible line 80'' and the dispensing tube 70'', into the container 24'' to fill the lower portion of the container and the apertures in the fixed support plate 28'' up to the top of the support plate. Preferably, the liquid medium 26'' is introduced, for example, at the center and adjacent opposite ends of the dispensing tube 70'', for more uniform liquid medium distribution. As viewed in Figure 20, the elongated dispensing tube 70'' then is traversed from the left-hand side (front) of the container 24'', to the right-hand side (back) of the container, as illustrated by the horizontal arrows, while the resin metering device 40'' feeds a preselected amount of the liquid medium 26'' from the storage container 25'', to form a first liquid medium layer 164'' (thickness exaggerated for purposes of illustration) above the fixed support plate 28''. As viewed in Figure 21, with the dispensing tube 70'' then stopped adjacent the back of the container 24'', a preselected cross-section of the initial layer 164'' is solidified by the laser beam from the laser 50'' (shown only in Figure 19).

As is illustrated in Figure 22 by the vertical arrow, the support plate 42'' then is raised vertically so that the parts mounted thereon, comprising the laser 50'' (Figure 19), scanning mechanism 32'' and coating mechanism 34'', including the dispensing tube 70'', are raised a one layer increment for a next liquid medium dispensing-and-solidifying operation.

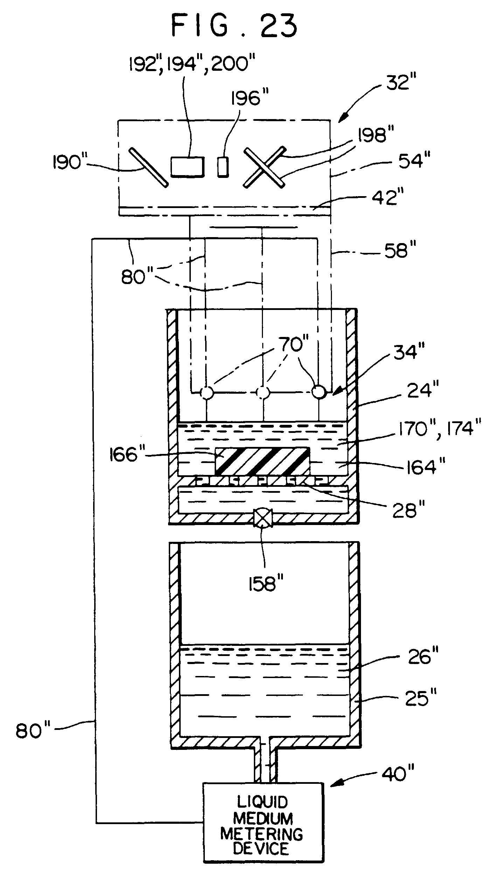

Next, referring to Figure 23, the dispensing tube 70'' is traversed from the back of the container 24'', in a reverse direction (to the left in this figure) to its initial front position, while the resin metering device 40'' again delivers a preselected amount of the liquid medium 26'' to the dispensing tube, to form a second liquid medium layer 170'', 174'' (thickness also exaggerated for purposes of illustration) above the initial layer 164'' and over the first-solidified article cross-section 166''. With the dispensing tube 70'' then located adjacent the front of the container 24'', as shown in Figure 23, a preselected cross-section of the second layer 170'', 174'' then is solidified by the laser beam as previously described. This procedure, of alternately dispensing a layer of the liquid medium 26'' from the dispensing tube 70'', solidifying a preselected cross-section of each layer by the laser beam, and raising the scanning mechanism 32'' and coating mechanism 34'', including the dispensing tube and other associated structure,then is repeated, until the article 22'' has been completed, as illustrated in Figure 24. The liquid medium 26'' then may be drained from the container 24'' by a pump (or valve) 158'' into the lower liquid medium storage container 25'', and the article 22'' removed. In other respects, the apparatus functions essentially as shown in Figure 17 for the first embodiment of the invention, except that a determination that the level of the liquid medium is incorrect results in operation of the coating mechanism 34'', rather than the bellows 150.

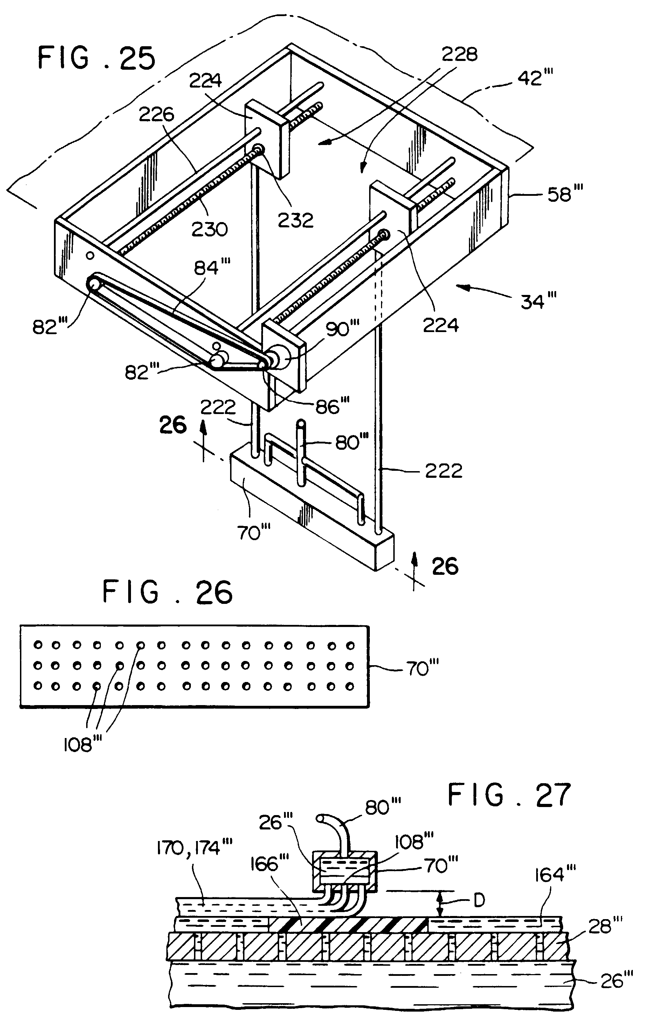

The liquid medium coating mechanism 34'' may be of essentially the same construction as the liquid medium coating mechanism 34 shown in Figures 1-3 of the first embodiment of the invention, but preferably is of the modified type as disclosed in Figures 25-27. Figures 25-27 disclose a liquid medium coating mechanism 34''' which comprises a rectangular subframe 58''' and an apertured liquid medium coating or dispensing tube 70''' having a flexible feed line 80''' connected to a central portion and opposite end portions thereof. The dispensing tube 70''' is secured adjacent opposite ends to lower ends of vertically extending support rods 222 secured at upper ends to respective driven slide blocks 224. The slide blocks 224 are supported for sliding movement on horizontally disposed slide rods 226 having opposite ends fixedly mounted in respective ones of a pair of opposite walls of the subframe 58'''. The slide blocks 226 are driven by a twin linear ball screw drive mechanism 228 comprising a pair of rotatable drive screws 230 which are threadably received in associated ball screw members 232 mounted in respective ones of the slide blocks, with opposed ends of the drive screws journaled in the opposed walls of the subframe 58'''. A projecting portion of each drive screw 230 has a drive pulley 82''' fixedly mounted thereon and drivingly connected by a belt 84''' to a drive pulley 86''' on a shaft of a small reversible drive motor 90''' mounted on a projecting portion of the subframe 58'''.

Referring to Figures 26 and 27, the bottom of the liquid medium dispensing tube 70''' includes a plurality of small apertures 108''' through which the liquid medium 26''' (shown only in Figure 27) is forced under pressure, such as by the liquid medium metering device 40'' of Figures 19-24, in the forming of a layer of the liquid medium. The size of the apertures 108''' is such that when pressure exerted by the liquid medium metering device 40'' is interrupted, as previously described, the flow of the liquid medium 26''' through the apertures also is automatically interrupted, thus eliminating the need for any solenoid-operated shut-off mechanisms as previously described and shown in Figures 5C and 5D. By way of example, while the number and size of the apertures 108''' may vary depending on other process variables, such as the thickness of the layer to be formed, and the viscosity of the liquid medium 26''', in general, favorable results have been achieved in the forming of a liquid medium layer in the abovementioned range on the order of 0.0017" to 0.020" thick, using three rows of apertures spaced apart in a range on the order of 0.055" to 0.065", with the apertures in each row spaced apart in a range on the order of 0.090" to 0.105", and with an aperture size in a range on the order of 0.010" to 0.20".

Figure 27 illustrates the use of the liquid medium dispensing tube 70''' of Figures 25 and 26 in the forming of a layer 170''', 174''' of the liquid medium 26'''. For this purpose, the dispensing tube 70''' is located above a previously formed liquid medium layer 164''' a distance D slightly greater than the thickness of the layer 170''', 174''' being formed, so that the liquid medium 26''' is dispensed in a uniform, controlled manner as a result of capillary action and the surface tension of the liquid medium, as the liquid medium is dispensed onto the previous layer. More specifically, with the dispensing tube 70''' disclosed, the liquid medium 26''' is dispensed in the form of three rows of capillary columns to form a series of three sublayers of essentially uniform thickness, with the surface tension of the sublayers becoming broken as the sublayers engage one another, to form the unitary liquid medium layer 170''', 174''' to the desired thickness. While the distance D between the bottom of the dispensing tube 70''' and the previously formed layer 164''' may vary depending upon other process variables, such as the thickness of the layer 170''', 174''' being formed, for a layer thickness in the abovementioned range of 0.0017" to 0.020", favorable results have been achieved with the distance D in a range on the order of 0.025" to 0.035".

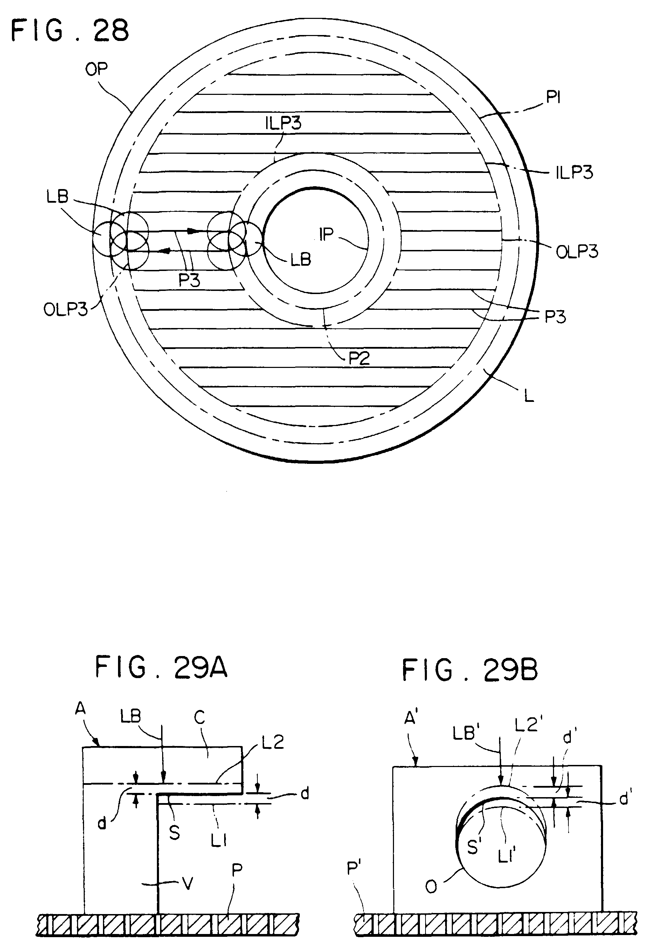

Figure 28 is a schematic diagram illustrating a path which may be travelled by a laser beam LB in the solidification of the cross-section of a liquid medium layer L. In this instance, the layer L is illustrated as being of a cylindrical configuration, having an outer periphery OP and an inner periphery IP. To define the outer periphery OP of the layer L, the laser beam LB is directed so that the center of the beam travels along a circular path indicated by a broken line P1 spaced radially inward a distance equal to one-half the beam diameter. Similarly, the inner periphery IP of the layer L is defined by directing the laser beam LB so that the center of the beam travels along a circular path designated by a broken line P2 spaced radially outward from the inner periphery IP a distance equal to one-half the beam diameter. The remaining portion of the layer L is solidified by traversing the laser beam LB back and forth across the layer, as illustrated by solid lines P3, with each path of the laser beam overlapping a previous path, such as by one-half of the beam diameter. At the same time, the travel of the laser beam LB in either direction is terminated short of the outer and inner peripheries OP and IP of the layer L, such as by one-half the beam diameter, so that the traversing laser beam does not touch either the outer or inner periphery, so as to cause irregularities therein.

Further, in solidifying successive alternate ones of the liquid medium layers, the laser beam LB preferably is traversed in directions perpendicular to the paths P3 for the layer L to form a more uniform article structure. The layer periphery-defining paths P1 and P2 of the laser beam LB, and the layer inner portion-defining traversing paths P3 of the laser beam, also may be accomplished in any order, but preferably the outer and inner peripheries OP and IP of the layer L are defined after the layer inner portion traversing paths P3 have been completed. If desired, the size of the laser beam LB also may reduced in diameter for the purpose of defining the outer and inner peripheries OP and IP of the layer L.

Figures 29A and 29B illustrate a laser beam-offset mode of operation wherein an article being formed includes a downwardly facing surface. For example, Figure 29A illustrates an inverted L-shaped article A on an apertured fixed support plate P, having a vertically extending portion V and a laterally projecting cantilevered portion C at its upper end, with the cantilevered portion having a downwardly facing surface S. Thus, if in the initial forming of the cantilevered portion C, a laser beam LB is directed at a surface of a liquid medium (not shown) corresponding to the downwardly facing surface S, the laser beam actually will penetrate the liquid medium to a level below the surface a distance d as indicated by a broken line L1, thereby causing an error in the configuration of the formed article A. Accordingly, in forming the surface S of the article cantilevered portion C, the laser beam LB is programmed so that it is not directed across the liquid medium above the surface until the level of the liquid medium is at a corresponding distance d above the level of the surface, as indicated by the broken line L2.

Similarly, Figure 29B illustrates the forming of a block-shaped article A' having a central opening 0 therethrough, with the opening having an interior downwardly facing surface S'. Accordingly, as in the article A shown in Figure 29A, in forming of the surface S' of the opening 0, if a laser beam LB' is directed to successive surface levels of a liquid medium (not shown) at points corresponding to the downwardly facing surface, because of the solidification depth penetration d' of the laser beam, the upper half of the opening will be solidified along a broken line L1', producing an error in the configuration of the formed article A'. Accordingly, as in Figure 29A, in forming the downwardly facing surface S' of the opening 0, the laser beam LB' is programmed so that it is directed at points on successive surface levels of the liquid medium which are the distance d' above the surface S', as illustrated by the broken line L2'.

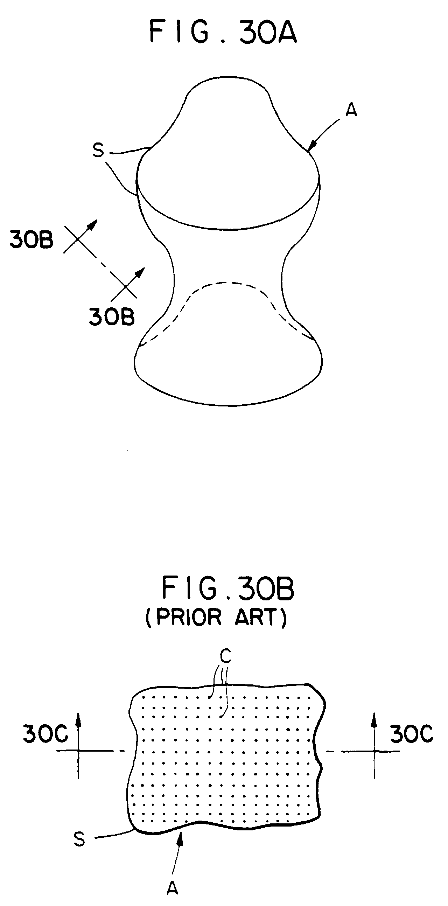

Figure 30A shows an article A having one or more compound and/or reverse curved peripheral surfaces S, and Figure 30B is a view of a coordinate network for a portion of one of the curved compound curved surfaces, made up of coordinates C, which may be developed utilizing the abovementioned software of the Structure Dynamics Research Corporation. While the coordinates C are shown in the form of a grid which will define square-shaped facets on the surfaces S of the finished article A, other grid arrangements, such as triangular, rectangular or polygonal, may be used.

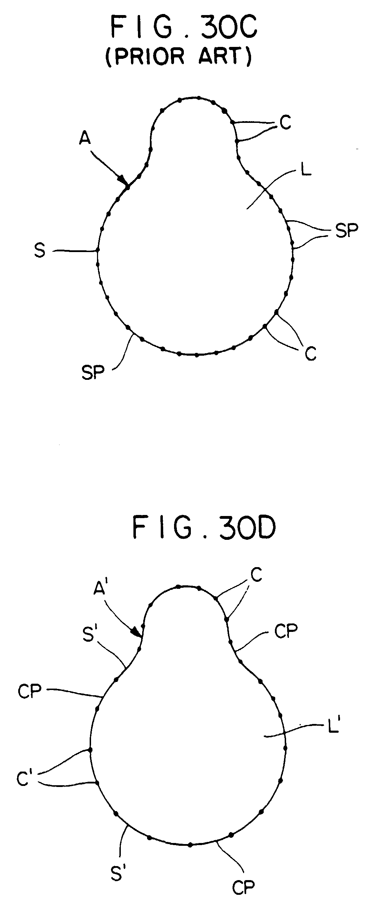

With reference to Figure 30C, which represents a cross-sectional layer L of the article A, in utilizing the thus-defined network of Figure 30B in forming the compound and/or reverse curved surfaces S of the article, in the past a laser beam has been directed around the periphery of the layer between successive ones of the coordinates C along straight-line paths SP. As a result, a thus-formed peripheral portion of the layer L, instead of being a true curve or series of curves, is in the form of a series of the interconnected straight-line paths SP, and the resultant curved surfaces S actually are a series of essentially flat-faced facets. This can be partially remedied by moving the coordinates C closer together, but this is disadvantageous for various reasons, such as the additional coordinate computations and coordinate memory storage required.

Accordingly, referring to Figure 30D, instead of moving coordinates C' for an article layer L' of an article A' closer together, the coordinates are selectively moved further apart, depending upon the sharpness of the curves being formed. The computer 168 then is programmed with artificial curve coordinate data, corresponding to a desired curve portion CP between each successive pair of the coordinates C', which has been generated by suitable software interpolation using various criteria stored in the CAD station 202, such as the known positions of each successive pair of the coordinates C', positions of the coordinates in adjacent article layers, and radii of curvature between coordinates. During the solidifying of the article A', the computer 168 then directs the laser beam in short straight-line or curved paths along the artificially created curved paths CP, to form the article A' with essentially smooth flowing curved surfaces S'.

In summary, a new and improved method of and apparatus for forming a solid three-dimensional article 22, such as the articles 22a and 22b in Figures 18A and 18B, respectively, or the article 22'' in Figure 24, from a liquid medium 26, has been disclosed. The method and apparatus, as disclosed in the first preferred embodiment of the invention shown in Figures 1-14, involves initially coating a layer of the liquid medium 26 onto the apertured support plate 28 in the liquid medium container 24, as illustrated in Figure 8. An initial cross-section or profile 166 of the article then is formed by solidifying the liquid medium 26, as illustrated in Figure 9, and the scanner head 54 is raised one increment. Next, the liquid level of the liquid medium 26 is raised by operation of the bellows 150, to form the meniscus 172 around the solidified cross-section or profile 166 of the article 22, as illustrated in Figure 10. Another coating of the liquid medium 26 then is applied to the solidified cross-section or profile 166 of the article within the recess defined by the meniscus 172, as shown in Figure 11, causing the meniscus to break and the liquid medium layers 170 and 174 to merge, as shown in Figure 12. A next cross-section or profile 176 of the article 22 then is solidified by the scanning system 32, as illustrated in Figure 13, and the scanner head 54 is again raised an additional increment. This sequence of operations then is continued until all of the cross-sections or profiles of the article 22 being formed have been completed. The scanning system 32 then may be raised to its upper "home" position by the lift mechanism 44, and the drain valve 158 for the bellows 150 opened to permit lowering of the liquid medium 26 in the container 24 to its lowermost "home" position, to permit access to the completed article 22 and removal of the article from the apparatus 20.

In the second preferred embodiment of the invention, as shown in Figures 19-24, which operates in essentially the same manner as the first embodiment of the invention, each layer of the liquid medium 26'' is produced above the apertured fixed support plate 28'' by dispensing the entire layer from the dispensing tube 70'' in the container 24''. Further, when the dispensing tube 70''' shown in Figures 25-27 is utilized, the small size of the dispensing apertures 108''' causes the tube to stop dispensing automatically in response to cessation of exerted pressure by the liquid medium metering device 40'', without the use of any other type shut-off mechanism. The traversing of the dispensing tube 70''' closely adjacent each previous liquid medium layer also enables the liquid medium 26''' to be dispensed in a uniform, controlled manner as a result of capillary action and surface tension.

As stated previously, the laser 50 is preferably a visible light laser and the liquid polymer 26 is one which hardens by such laser energy. Other type lasers can be substituted for the visible light laser without departing from the invention, such as a UV light laser, a Nd-Yag laser or a CO₂ laser, along with a compatible polymer. Other known types of energy sources, such as other forms of UV or visible light, invisible light, cathode ray tubes, electron beams, x-rays and other forms of radiation and/or high energy beams may also be used in this invention. However, it is believed that a visible light laser is the preferred energy source because visible light lasers generally provide more energy and thus are able to achieve better solidification and definition in the hardened layer, more quickly.

## Claims

1. A method of forming a three-dimensional article (22a, 22b) constituted by successively selectively solidified layers of a liquid medium (26) solidifiable by application (54) thereto of a prescribed energy, the article being formed in a body of said liquid medium (26) held in a container (24) and the formation of each solidified layer comprising;
coating the surface of a last-solidified layer (166) with fresh liquid medium by dispensing (70, 70') liquid medium from above said surface; and applying (54) said prescribed energy to said fresh liquid medium in accordance with a defined pattern to selectively solidify said fresh liquid medium, and being characterised in that:
the liquid medium dispensed (70) from above said surface is obtained by withdrawing (40) a quantity of said liquid medium from said container (24), and
said coating of the surface of a last-solidified layer and said applying of said prescribed energy are alternately repeated in the formation of the successively selectively solidified layers.

2. A method as claimed in Claim 1 in which the quantity of liquid medium withdrawn from said container (24) is a known, metered, quantity (40) and a known, metered, quantity is supplied for dispensing (70) from above said surface.

3. A method as claimed in Claim 1 or 2 in which said container is in two parts (24''; 25'') connected by means (158'') operable to allow liquid medium to flow from a first container part (24'') to a second container part (25''), and wherein said article (22a, b) is formed in the first container part (24'') and a reservoir of liquid medium is contained in the second container part (25''), and wherein said withdrawing (40') of said quantity of liquid medium is done from the second container part (25'').

4. A method according to Claim 1, 2 or 3 wherein the withdrawing (40, 40') and supplying of said liquid medium is done by means of a metering pump.

5. A method according to any preceding claim wherein the liquid medium is dispensed from an elongate tube (70, 70').

6. A method according to Claim 5 wherein the liquid medium is dispensed through an elongate slot (114) in said elongate tube (70, 70').

7. A method according to Claim 5 wherein the liquid medium is dispensed through a plurality of apertures (108) in said elongate tube (70, 70').

8. A method according to Claim 7 wherein each aperture of said plurality is independently selectively closeable.

9. A method according to Claim 7 wherein each aperture is sized to dispense liquid medium only when pressure is applied to the liquid medium, and wherein, during the dispensing of the liquid medium, pressure is applied to the liquid medium supplied to said elongate tube (70, 70').

10. A method according to Claim 9 wherein each aperture (108) has a diameter in the range of 0.25 to 0.50 mm.

11. A method according to any one of Claims 1-4 wherein the dispensing of liquid medium is effected by moving a dispenser (70) in a horizontal plane above said surface.

12. A method according to Claim 11 wherein the step of moving the dispenser (70) in a horizontal plane includes traversing the dispenser between opposite sides of the container (24).

13. A method according to any one of Claims 1-4 in which the dispensing of the liquid medium is effected by moving a dispenser (70') in a pendulum-type manner (98-106).

14. A method according to any one of Claims 1 to 4 wherein the dispensing of the liquid medium is effected by moving a dispenser (70'') positioned closely adjacent the last-solidified layer (166) so that liquid medium is dispensed in a uniform, controlled manner by capillary action and surface tension.

15. A method according to any one of Claims 1 to 12 in which the coating of said last-solidified layer (166) with fresh liquid medium further comprises the formation of a meniscus (172) of the body (170) of liquid medium around the periphery of the last-solidified layer (166) and thereafter dispensing liquid medium (174) over said last-solidified layer (166) to break said meniscus (172) so that liquid medium (174) surrounding the last-solidified layer and liquid dispensed over the last-solidified layer (166) flow together.

16. A method according to Claim 15 in which said meniscus (172) is formed by expanding an expandable member (150) inside the container (24) to cause the liquid level in the container to rise.

17. A method according to any one of Claims 1 to 16 wherein the article (22a, b) is formed on a fixed support (28) in the container.

18. A method according to Claim 17 wherein said fixed support (28) is apertured.

19. A method according to any one of Claims 1 to 4 in which the dispensing of liquid medium is effected by moving a dispenser (70'''), positioned closely adjacent the last-solidified layer (166''') so that a bridge of liquid medium is maintained between the dispenser (70''') and the coating (170, 174''') being formed on said surface.

20. A method according to any one of Claims 1 to 19 wherein the liquid medium is a photopolymer material.

21. A method according to any one of Claims 1 to 20 wherein the prescribed energy is visible light provided by a laser (50).

22. A method according to any one of Claims 1 to 20 wherein the prescribed energy is UV radiation provided by a laser (50).

23. Apparatus for forming a three-dimensional article (22a, 22b) constituted by successively solidified layers of a liquid medium (26) solidifiable by application thereto of a prescribed energy, the apparatus comprising:
a container (24) for holding a body of said liquid medium (26) in which the article (22a, b) is formed;
a dispenser (70, 70') located above said body of liquid medium to dispense fresh liquid medium (174) for coating liquid medium over the surface of a last-solidified layer; and
means (54) for selectively applying said prescribed energy to said fresh liquid medium (174) to form the next solidified layer in accordance with a defined pattern, characterized by:
means (40) connected to said container (24)to withdraw a quantity of said liquid medium therefrom and connected to said dispenser (70) to feed a quantity of withdrawn liquid medium to said dispenser (70).

24. Apparatus according to Claim 23 in which said means (40) is a device (136, 138) adapted to withdraw a known, metered, quantity of liquid medium from said container and to feed a known, metered, quantity of liquid medium to said dispenser (70).

25. Apparatus according to Claim 23 or 24 in which said container is in two parts (24'': 25'') in a first (24'') of which container parts the article (22a, b) is formed and the second (25'') of which container parts provides storage for a reservoir of said liquid medium, the means (40) for withdrawing the liquid medium being connected to said second container part (25''), and said container parts (24'', 25'') being connected by means (158'') operable to allow liquid medium to flow from said first container part (24'') to said second container part (25'').

26. Apparatus according to Claim 23, 24 or 25 wherein the means (136, 138) for withdrawing and feeding of said liquid medium is a metering pump.

27. Apparatus according to any one of Claims 23 to 25 wherein the dispenser (70') comprises an elongate tube from which liquid medium is dispensed.

28. Apparatus according to Claim 27 wherein said tube has an elongate slot (114) through which the liquid medium is dispensed.

29. Apparatus according to Claim 27 wherein the elongate tube includes a plurality of apertures (108) from which liquid medium is dispensed.

30. Apparatus according to Claim 29 wherein each aperture of said plurality is independently selectively closeable.

31. Apparatus according to Claim 29 wherein each aperture is sized to dispense liquid medium only when pressure is applied to the liquid medium.

32. Apparatus according to Claim 31 wherein said means (136, 138)for feeding said liquid medium provides pressure that is applied to the liquid medium supplied to said elongate tube.

33. Apparatus according to Claim 31 or 32 wherein each aperture has a diameter in the range of 0.25 to 0.50 mm.

34. A method according to any one of Claims 23 to 32 wherein the dispenser is operable to move in a horizontal plane above said surface.

35. Apparatus according to Claim 34 wherein the dispenser (70) is movable in a horizontal plane between opposite sides of the container (24).

36. Apparatus according to any one of Claims 23 to 32 wherein the dispenser (70') is mounted to move in a pendulum-type manner (98-106).

37. Apparatus according to any one of Claims 23 to 35 wherein the dispenser (70''') is positioned to move closely adjacent the last-solidified layer (166''') so that liquid medium is dispensed from the tube in a uniform, controlled manner by capillary action and surface tension.

38. Apparatus as claimed in any one of Claims 23 to 35 wherein the dispenser (70''') is positioned to move closely adjacent the last-solidified layer so that a bridge of liquid medium is maintained between the dispenser (70''') and the coating (170, 174''') being formed on said surface.

39. Apparatus according to any one of Claims 23 to 35 further comprising an expandable member (150) inside the container (24) to cause the liquid level in the container to rise to form a meniscus (172) around the periphery of the last-solidified layer (166).

40. Apparatus according to any one of Claims 23 to 38 wherein the article (22a, b) is formed on a fixed support (28) in the container (24).

41. Apparatus according to Claim 40 wherein said fixed support (28) is apertured.

42. Apparatus according to any one of Claims 23 to 41 wherein the dispenser(70) is connected to said means (40) for feeding the liquid medium via a flexible line (80).

43. Apparatus according to any one of Claims 23 to 42 wherein said means for selectively applying (54) the prescribed energy includes a laser (50) for generating the prescribed energy in the form of visible light.

44. Apparatus according to any one of Claims 23 to 42 wherein said means (54) for selectively applying (54) the prescribed energy includes a laser (50) for generating the prescribed energy in the form of UV radiation.

45. Apparatus as claimed in any one of Claims 23 to 44, further Comprising means (168) for controlling the operation of said dispenser (70, 70') and of said means (54) for selectively applying said prescribed energy to alternately repeat the coating of liquid medium over a last-solidified layer and the application of said prescribed energy thereto.

## Patentansprüche

1. Verfahren zum Formen eines dreidimensionalen Gegenstandes (22a, 22b) bestehend aus nacheinander selektiv verfestigten Schichten eines flüssigen Mediums (26), welches durch Anwendung einer vorgeschriebenen Energie (54) darauf verfestigbar ist, wobei der Gegenstand in einer Masse des flüssigen Mediums (26), welches in einem Behälter (24) gehalten ist, geformt ist, und die Bildung jeder der verfestigten Schichten umfaßt:
Beschichten der Oberfläche einer zuletzt verfestigten Schicht (166) mit frischen, flüssigen Medium durch Ausgeben (70, 70') des flüssigen Mediums von oberhalb der Oberfläche; und Anwenden (54) der vorgeschriebenen Energie auf das frische flüssige Medium in Übereinstimmung mit einem definierten Muster, um das frische flüssige Medium selektiv zu verfestigen,
dadurch gekennzeichnet, daß
das von oberhalb der Oberfläche ausgegebene flüssige Medium (70) durch Abziehen (40) einer Menge des flüssigen Mediums aus dem Behälter (24) erhalten wird, und
die Beschichtung der Oberfläche einer zuletzt verfestigten Schicht und das Anwenden der vorgeschriebenen Energie bei der Bildung der sukzessiv gehärteten Schichten alternierend wiederholt wird.

2. Verfahren nach Anspruch 1, wobei die vom Behälter (24) abgezogene Menge des flüssigen Mediums eine bekannte gemessene Menge (40) ist, und wobei eine bekannte gemessene Menge zum Ausgeben (70) von oberhalb der Oberfläche zugeführt wird.

3. Verfahren nach Anspruch 1 oder 2, wobei der Behälter zwei Teile (24'', 25'') hat, die durch Mittel miteinander verbunden sind, die betreibbar sind, um flüssigem Medium zu erlauben, von einem ersten Behälterteil (24'') zu einem zweiten Behälterteil (25'') zu fließen, und wobei der Gegenstand (22a, b) in dem ersten Behälterteil (24'') gebildet wird und ein Reservoir des flüssigen Mediums im zweiten Behälterteil (25'') enthalten ist, und wobei das Abziehen (40') der Menge des flüssigen Mediums aus dem zweiten Behälterteil (25'') erfolgt.

4. Verfahren nach einem der Ansprüche 1 bis 3, wobei das Abziehen (40, 40') und das Zuführen des flüssigen Mediums mittels einer Dosierpumpe erfolgt.

5. Verfahren nach einem der vorhergehenden Ansprüche, wobei das flüssige Medium aus einer länglichen Röhre (70, 70') ausgegeben wird.

6. Verfahren nach Anspruch 5, wobei das flüssige Medium durch einen länglichen Schlitz (114) in der länglichen Röhre (70, 70') ausgegeben wird.

7. Verfahren nach Anspruch 5, wobei das flüssige Medium durch mehrere Öffnungen (108) in der länglichen Röhre (70, 70') ausgegeben wird.

8. Verfahren nach Anspruch 7, wobei jede der mehreren Öffnungen unabhängig selektiv verschließbar ist.

9. Verfahren nach Anspruch 7, wobei jede Öffnung so bemessen ist, flüssiges Medium nur dann auszugeben, wenn das flüssige Medium unter Druck gesetzt wird, und wobei während des Ausgebens des flüssigen Mediums das dem länglichen Rohr (70, 70') zugeführte flüssige Medium unter Druck gesetzt wird.

10. Verfahren nach Anspruch 9, wobei jede Öffnung (108) einen Durchmesser im Bereich von 0,25 bis 0,50 mm aufweist.

11. Verfahren nach einem der Ansprüche 1 bis 4, wobei das Ausgeben des flüssigen Mediums durch Bewegung eines Ausgabegerätes (70) in einer horizontalen Ebene oberhalb der Oberfläche bewirkt wird.

12. Verfahren nach Anspruch 11, wobei der Schritt des Bewegens des Ausgabegerätes (70) in einer horizontalen Ebene das Verschieben der Ausgabevorrichtung zwischen gegenüberliegenden Seiten des Behälters (24) umfaßt.

13. Verfahren nach einem der Ansprüche 1 bis 4, wobei das Ausgeben des flüssigen Mediums durch Bewegung eines Dosiergerätes (70') in einer pendelartigen Bewegung (98-106) bewirkt wird.

14. Verfahren nach einem der Ansprüche 1 bis 4, wobei das Ausgeben des flüssigen Mediums durch Bewegung eines nahe an die zuletzt verfestigte Schicht (166) angrenzend positionierten Dosiergerätes (70'') bewirkt wird, so daß das flüssige Medium in einer gleichmäßigen kontrollierten Weise durch Kapillarwirkung oder Oberflächenspannung ausgegeben wird.

15. Verfahren nach einem der Ansprüche 1 bis 12, wobei die Beschichtung der zuletzt verfestigten Schicht (166) mit frischem flüssigen Medium weiterhin die Bildung eines Meniskus (172) auf dem Körper (170) des flüssigen Mediums um die Peripherie der zuletzt verfestigten Schicht (166) umfaßt und daran anschließend Ausgeben des flüssigen Materials (174) über die zuletzt verfestigte Schicht (166), um den Meniskus (172) zu brechen, so daß das die zuletzt verfestigte Schicht umgebende flüssige Medium (174) und die über der zuletzt verfestigten Schicht (166) ausgegebene Flüssigkeit zusammenfließen.

16. Verfahren nach Anspruch 15, wobei der Meniskus (172) durch Ausdehnen des ausdehnbaren Elementes innerhalb des Behälters (24) zum Anheben des Flüssigkeitspegels in dem Behälter gebildet wird.

17. Verfahren nach einem der Ansprüche 1 bis 16, wobei der Gegenstand (22a, b) auf einem fixierten Träger (28) in dem Behälter gebildet wird.

18. Verfahren nach Anspruch 17, wobei der fixierte Träger (28) mit Öffnungen versehen ist.

19. Verfahren nach einem der Ansprüche 1 bis 4, wobei das Ausgeben des flüssigen Mediums unter Bewegung eines Ausgabegerätes (70''') bewirkt, welches nahe an die zuletzt verfestigte Schicht (166''') angrenzend positioniert ist, so daß eine Brücke des flüssigen Mediums zwischen dem Ausgabegerät (70''') und der Beschichtung (170, 174''') aufrechterhalten wird, die auf der Oberfläche gebildet wird.

20. Verfahren nach einem der Ansprüche 1 bis 19, wobei das Medium ein photopolymerisches Material ist.

21. Verfahren nach einem der Ansprüche 1 bis 20, wobei die vorgeschriebene Energie sichtbares Licht ist, welches von einem Laser (50) bereitgestellt wird.

22. Verfahren nach einem der Ansprüche 1 bis 20, wobei die vorgeschriebene Energie UV-Strahlung ist, welche von einem Laser (50) bereitgestellt wird.

23. Vorrichtung zur Formung eines dreidimensionalen Artikels (22a, b) bestehend aus aufeinanderfolgend verfestigten Schichten eines flüssigen Mediums (26), welches durch Anwendung einer vorgeschriebenen Energie darauf verfestigbar ist, wobei die Vorrichtung umfaßt:
einen Behälter (24) zum Halten einer Masse des flüssigen Mediums (26), in welchem der Gegenstand (22a, b) gebildet wird;
eine Ausgabevorrichtung (70, 70'), die oberhalb der Masse des flüssigen Mediums angeordnet ist, um frisches flüssiges Medium (174) auszugeben, um flüssiges Medium auf der Oberfläche der zuletzt verfestigten Schicht aufzutragen; und
Mittel (54) zum selektiven Anwenden der vorgeschriebenen Energie auf das frische flüssige Medium (174), um die nächste verfestigte Schicht in Übereinstimmung mit einem definierten Muster zu bilden;
gekennzeichnet durch:
Mittel (40) in Verbindung mit dem Behälter (24) zum Abziehen einer Menge des flüssigen Mediums von diesem und verbunden mit dem Ausgabegerät (70), um eine Menge des abgezogenen flüssigen Mediums dem Ausgabegerät (70) zuzuführen.

24. Vorrichtung nach Anspruch 23, wobei das Mittel (40) ein Gerät (136, 138) ist, welches geeignet ist, eine bekannte gemessene Menge des flüssigen Mediums von dem Behälter abzuziehen und eine bekannte gemessene Menge des flüssigen Mediums der Ausgabevorrichtung (70) zuzuführen.

25. Vorrichtung nach Anspruch 23 oder 24, wobei der Behälter zweiteilig (24'', 25''), wobei in einem ersten (24'') der Behälterteile der Gegenstand (22 a, b) gebildet wird und wobei der zweite (25'') der Behälterteile Speicherkapazität für ein Reservoir des flüssigen Mediums bereitstellt, wobei das Mittel (40) zum Abziehen des flüssigen Mediums mit dem zweiten Behälterteil (25'') verbunden ist, und wobei die Behälterteile (24'', 25'') durch Mittel (158'') miteinander verbunden sind, welches betreibbar ist, um dem flüssigen Medium zu erlauben, von dem ersten Behälterteil (24'') zu dem zweiten Behälterteil (25'') zu fließen.

26. Vorrichtung nach Anspruch 23, 24 oder 25, wobei das Mittel (136, 138) zum Abziehen und Zuführen des flüssigen Mediums eine Dosierpumpe ist.

27. Vorrichtung nach einem der Ansprüche 23 bis 25, wobei die Ausgabevorrichtung (70') eine längliche Röhre umfaßt, aus der das flüssige Medium ausgegeben wird.

28. Vorrichtung nach Anspruch 27, wobei die Röhre einen länglichen Schlitz (114) aufweist, durch welchen das flüssige Medium ausgegeben wird.

29. Vorrichtung nach Anspruch 27, wobei die längliche Röhre mehrere Öffnungen (108) aufweist, aus denen das flüssige Medium ausgegeben wird.

30. Vorrichtung nach Anspruch 29, wobei jede der mehreren Öffnungen unabhängig voneinander selektiv verschließbar ist.

31. Vorrichtung nach Anspruch 29, wobei jede der Öffnungen so bemessen, das flüssige Medium nur dann auszugeben, wenn das flüssige Medium unter Druck gesetzt wird.

32. Vorrichtung nach Anspruch 31, wobei das Mittel (136, 138) zum Zuführen des flüssigen Mediums Druck bereitstellt, unter den das der länglichen Röhre zugeführte flüssige Medium gesetzt wird.

33. Vorrichtung nach Anspruch 31 oder 32, wobei jede Öffnung einen Durchmesser in dem Bereich von 0,25 bis 0,50 mm aufweist.

34. Vorrichtung nach einem der Ansprüche 23 bis 32, wobei die Ausgabevorrichtung betreibbar ist, um sich in einer horizontalen Ebene oberhalb der Oberfläche zu bewegen.

35. Vorrichtung nach Anspruch 34, wobei die Ausgabevorrichtung (70) in einer horizontalen Ebene zwischen gegenüberliegenden Seiten des Behälters (24) beweglich ist.

36. Vorrichtung nach einem der Ansprüche 23 bis 32, wobei die Ausgabevorrichtung (70') montiert ist, um sich pendelartig zu bewegen (98-106).

37. Vorrichtung nach einem der Ansprüche 23 bis 35, wobei die Ausgabevorrichtung (70''') positioniert ist, um sich nahe angrenzend an die zuletzt verfestigte Schicht (166''') zu bewegen, so daß flüssiges Medium von der Röhre in einer gleichförmigen kontrollierten Art durch Kapillarwirkung und Oberflächenspannung ausgegeben wird.

38. Vorrichtung nach einem der Ansprüche 23 bis 35, wobei die Ausgabevorrichtung (70''') positioniert ist, um sich nahe angrenzend an der zuletzt verfestigten Schicht zu bewegen, so daß eine Brücke des flüssigen Mediums zwischen der Ausgabevorrichtung (70''') und der Beschichtung (170, 174'''), die auf der Oberfläche gebildet wird, aufrechterhalten wird.

39. Vorrichtung nach einem der Ansprüche 23 bis 35 weiter umfassend ein ausdehnbares Element (150) in dem Behälter (24), um den Flüssigkeitspegel in dem Behälter zum Steigen zu veranlassen, um einen Meniskus (172) um die Umgebung der zuletzt verfestigten Schicht (166) zu bilden.

40. Vorrichtung nach einem der Ansprüche 23 bis 38, wobei der Gegenstand (22 a, b) auf einem fixierten Träger (28) in dem Behälter (24) gebildet wird.

41. Vorrichtung nach Anspruch 40, wobei der fixierte Träger (28) mit Öffnungen versehen ist.

42. Vorrichtung nach einem der Ansprüche 23 bis 41, wobei die Ausgabevorrichtung (70) mit dem Mittel (40) zum Zuführen des flüssigen Mediums über eine flexible Leitung (80) verbunden ist.

43. Vorrichtung nach einem der Ansprüche 23 bis 42, wobei das Mittel zum selektiven Anwenden (54) der vorgeschriebenen Energie einen Laser (50) zum Erzeugen der vorgeschriebenen Energie in Form von sichtbarem Licht umfaßt.

44. Vorrichtung nach einem der Ansprüche 23 bis 42, wobei das Mittel (54) zum selektiven Anwenden (54) der vorgeschriebenen Energie einen Laser (50) zum Erzeugen der vorgeschriebenen Energie in der Form von UV-Strahlung umfaßt.

45. Vorrichtung nach einem der Ansprüche 23 bis 44, weiter umfassend Mittel (168) zum Steuern des Betriebs der Ausgabevorrichtung (70,70') und der Mittel (54) zum selektiven Anwenden der vorgeschriebenen Energie zum alternierenden Wiederholen der Beschichtung der zuletzt verfestigten Schicht mit flüssigem Medium und der Anwendung der beschriebenen Energie darauf.

## Revendications

1. Procédé pour former un article tridimensionnel (22a, 22b) constitué par des couches, solidifiées successivement et sélectivement, de matière liquide (26) solidifiable par l'application (54), sur celle-ci, d'une énergie prescrite, l'article étant formé dans un volume de ladite matière liquide (26) que contient un conteneur (24) et la formation de chaque couche solidifiée comprenant
le dépôt sur la surface d'une couche solidifiée en dernier (166) de matière liquide neuve en distribuant (70, 70') la matière liquide depuis le dessus de ladite surface ; et l'application (54) de ladite énergie prescrite sur ladite matière liquide neuve suivant une configuration définie afin de faire solidifier d'une manière sélective ladite matière liquide neuve, et étant caractérisé en ce que :
la matière liquide distribuée (70) depuis le dessus de ladite surface est obtenue en extrayant (40) une certaine quantité de ladite matière liquide à partir dudit conteneur (24), et
ledit dépôt sur la surface de la couche solidifiée en dernier et ladite application de ladite énergie prescrite sont répétés d'une manière alternée pendant la formation des couches solidifiées successivement et sélectivement.

2. Procédé selon la revendication 1, dans lequel la quantité de matière liquide extraite à partir dudit conteneur (24) est une quantité dosée (40) connue, et une quantité dosée connue est alimentée de manière à être distribuée (70) depuis le dessus de ladite surface.

3. Procédé selon la revendication 1 ou 2, dans lequel ledit conteneur est en deux parties (24'' ; 25'') reliées par des moyens (158'') qu'il est possible de commander de manière à permettre à la matière liquide de s'écouler depuis une première partie (24'') du conteneur vers une seconde partie (25'') du conteneur, et dans lequel ledit article (22a, 22b) est formé dans la première partie (24'') du conteneur et un réservoir de matière liquide est contenu dans la seconde partie (25'') du conteneur, et dans lequel ladite extraction (40') de ladite quantité de matière liquide s'effectue à partir de la seconde partie (25'') du conteneur.

4. Procédé selon la revendication 1, 2 ou 3, dans lequel l'extraction (40, 40') et l'alimentation de ladite matière liquide s'effectuent par l'intermédiaire d'une pompe doseuse.

5. Procédé selon l'une quelconque des revendications précédentes, dans lequel la matière liquide est distribuée à partir d'un tube allongé (70, 70').

6. Procédé selon la revendication 5, dans lequel la matière liquide est distribuée à travers une fente allongée (115) dudit tube allongé (70, 70').

7. Procédé selon la revendication 5, dans lequel la matière liquide est distribuée à travers une pluralité d'ouvertures (108) dudit tube allongé (70, 70').

8. Procédé selon la revendication 7, dans lequel chaque ouverture de ladite pluralité peut être fermée sélectivement d'une manière indépendante.

9. Procédé selon la revendication 7, dans lequel chaque ouverture est dimensionnée de manière à ne distribuer de la matière liquide que lorsqu'une pression est appliquée sur la matière liquide, et dans lequel, durant la distribution de la matière liquide, une pression est appliquée sur la matière liquide alimentée dans ledit tube allongé (70, 70').

10. Procédé selon la revendication 9, dans lequel chaque ouverture (108) possède un diamètre situé dans la plage allant de 0,25 à 0,50 mm.

11. Procédé selon l'une quelconque des revendications 1 à 4, dans lequel la distribution de matière liquide s'effectue en déplaçant un distributeur (70) dans un plan horizontal au-dessus de ladite surface.

12. Procédé selon la revendication 11, dans lequel l'étape consistant à déplacer le distributeur (70) dans un plan horizontal comprend le déplacement du distributeur entre des côtés opposés du conteneur (24).

13. Procédé selon l'une quelconque des revendications 1 à 4, dans lequel la distribution de la matière liquide s'effectue en déplaçant un distributeur (70') à la manière d'un pendule (98-106).

14. Procédé selon l'une quelconque des revendications 1 à 4, dans lequel la distribution de la matière liquide s'effectue en déplaçant un distributeur (70'') positionné à proximité étroite de la couche solidifiée en dernier (166) de manière à ce que la matière liquide soit distribuée d'une manière régulée et uni forme par effet capillaire et tension superficielle.

15. Procédé selon l'une quelconque des revendications 1 à 12, dans lequel le dépôt sur ladite couche solidifiée en dernier (166) d'une matière liquide neuve comprend en outre la formation d'un ménisque (172) sur le volume (170) de matière liquide autour de la périphérie de la couche solidifiée en dernier (166) et, ensuite, la distribution de la matière liquide (174) au-dessus de ladite couche solidifiée en dernier (166) pour rompre ledit ménisque (172) de manière à ce que la matière liquide (174) entourant la couche solidifiée en dernier et le liquide distribué au-dessus de la couche solidifiée en dernier (166) s'écoulent ensemble.

16. Procédé selon la revendication 15, dans lequel ledit ménisque (172) est formé en faisant s'expanser un élément expansible (150) à l'intérieur du conteneur (24) de manière à faire monter le niveau de liquide à l'intérieur du conteneur.

17. Procédé selon l'une quelconque des revendications 1 à 16, dans lequel l'article (22a, 22b) est formé sur un support fixe (28) situé à l'intérieur du conteneur.

18. Procédé selon la revendication 17, dans lequel ledit support fixe (28) comporte des ouvertures.

19. Procédé selon l'une quelconque des revendications 1 à 4, dans lequel la distribution de matière liquide s'effectue en déplacant un distributeur (70'''), positionné à proximité étroite de la couche solidifiée en dernier (166'''), de manière à ce qu'une couche de matière liquide soit maintenue entre le distributeur (70''') et le revêtement (170, 174''') formé sur ladite surface.

20. Procédé selon l'une quelconque des revendications 1 à 19, dans lequel la matière liquide est un photopolymère.

21. Procédé selon l'une quelconque des revendications 1 à 20, dans lequel l'énergie prescrite est celle d'une lumière visible générée par un laser (50).

22. Procédé selon l'une quelconque des revendications 1 à 20, dans lequel l'énergie prescrite est celle d'un rayonnement ultraviolet généré par un laser (50).

23. Dispositif pour former un article tridimensionnel (22a, 22b) constitué par des couches, successivement solidifiées, de matière liquide (26) solidifiable par l'application (54), sur celle-ci, d'une énergie prescrite, le dispositif comportant :
un conteneur (24) destiné à contenir un volume de ladite matière liquide (26) dans lequel l'article (22a, 22b) est formé ;
un distributeur (70, 70') situé au-dessus dudit volume de matière liquide pour distribuer une matière liquide neuve (174) de manière à déposer la matière liquide au-dessus de la surface d'une couche solidifiée en dernier ; et
des moyens (54) pour appliquer d'une manière sélective ladite énergie prescrite sur ladite matière liquide neuve (174) de manière à former la couche solidifiée la suivante conformément à une configuration définie, caractérisé en ce qu'il comporte :
des moyens (40) reliés audit conteneur (24) pour en extraire une certaine quantité de ladite matière liquide et reliés audit distributeur (70) pour alimenter la quantité de matière liquide extraite vers ledit distributeur (70).

24. Dispositif selon la revendication 23, dans lequel lesdits moyens (40) sont un dispositif (136, 138) adapté pour extraire une quantité dosée connue de matière liquide à partir dudit conteneur et alimenter une quantité dosée connue de matière liquide vers ledit distributeur (70).

25. Dispositif selon la revendication 23 ou 24, dans lequel ledit conteneur est en deux parties (24'' ; 25''), l'article (22a, 22b) étant formé dans une première (24'') des parties du conteneur et la seconde (25'') des parties du conteneur servant de réservoir pour ladite matière liquide, les moyens (40) pour extraire la matière liquide étant reliés à ladite seconde partie (25'') du conteneur et lesdites parties du conteneur (24'', 25'') étant reliées via des moyens (158'') qui peuvent être commandés de manière à permettre à la matière liquide de s'écouler depuis ladite première partie (24'') du conteneur vers ladite seconde partie (25'') du conteneur.

26. Dispositif selon la revendication 23, 24 ou 25, dans lequel les moyens (136, 138) pour extraire et alimenter ladite matière liquide sont une pompe doseuse.

27. Dispositif selon l'une quelconque des revendications 23 à 25, dans lequel le distributeur (70') comprend un tube allongé à partir duquel est distribuée la matière liquide.

28. Dispositif selon la revendication 27, dans lequel ledit tube comporte une fente allongée (114) à travers laquelle la matière liquide est distribuée.

29. Dispositif selon la revendication 27, dans lequel le tube allongé comporte une pluralité d'ouvertures (108) à partir desquelles la matière liquide est distribuée.

30. Dispositif selon la revendication 29, dans lequel chaque ouverture de ladite pluralité peut être fermée sélectivement d'une manière indépendante.

31. Dispositif selon la revendication 29, dans lequel chaque ouverture est dimensionnée de manière à ne distribuer de la matière liquide que lorsqu'une pression est appliquée sur la matière liquide.

32. Dispositif selon la revendication 31, dans lequel lesdits moyens (136, 138) pour alimenter ladite matière liquide fournissent une pression qui est appliquée sur la matière liquide alimentée dans ledit tube allongé.

33. Dispositif selon la revendication 31 ou 32, dans lequel chaque ouverture possède un diamètre situé dans la plage allant de 0,25 à 0,50 mm.

34. Procédé selon l'une quelconque des revendications 23 à 32, dans lequel le distributeur peut être commandé pour se déplacer dans un plan horizontal au-dessus de ladite surface.

35. Dispositif selon la revendication 34, dans lequel le distributeur (70) peut se déplacer dans un plan horizontal entre des côtés opposés du conteneur (24).

36. Dispositif selon l'une quelconque des revendications 23 à 32, dans lequel le distributeur (70') est monté de manière à se déplacer à la manière d'un pendule (98-106).

37. Dispositif selon l'une quelconque des revendications 23 à 35, dans lequel le distributeur (70''') est positionné de manière à se déplacer à proximité étroite de la couche solidifiée en dernier (166'''), de sorte que la matière liquide soit distribuée à partir du tube d'une manière régulée et uniforme par effet capillaire et tension superficielle.

38. Dispositif selon l'une quelconque des revendications 23 à 35, dans lequel le distributeur (70''') est positionné de manière à se déplacer à proximité étroite de la couche solidifiée en dernier de sorte qu'une couche de matière liquide soit maintenue entre le distributeur (70''') et le revêtement (170, 174''') formé sur ladite surface.

39. Dispositif selon l'une quelconque des revendications 23 à 35, comportant en outre un élément expansible (150) situé à l'intérieur du conteneur (24) permettant de faire monter le niveau de liquide à l'intérieur du conteneur de manière à former un ménisque (172) autour de la périphérie de la couche solidifiée en dernier (166).

40. Dispositif selon l'une quelconque des revendications 23 à 38, dans lequel l'article (22a, 22b) est formé sur un support fixe (28) situé à l'intérieur du conteneur (24).

41. Dispositif selon la revendication 40, dans lequel ledit support fixe (28) comporte des ouvertures.

42. Dispositif selon l'une quelconque des revendications 23 à 41, dans lequel le distributeur (70) est relié auxdits moyens (40) pour alimenter la matière liquide via une ligne flexible (80).

43. Dispositif selon l'une quelconque des revendications 23 à 42, dans lequel lesdits moyens pour appliquer d'une manière sélective (54) l'énergie prescrite comprennent un laser (50) destiné à générer l'énergie prescrite sous la forme de lumière visible.

44. Dispositif selon l'une quelconque des revendications 23 à 42, dans lequel lesdits moyens (54) pour appliquer d'une manière sélective (54) l'énergie prescrite comprennent un laser (50) destiné à générer l'énergie prescrite sous la forme d'un rayonnement ultraviolet.

45. Dispositif selon l'une quelconque des revendications 23 à 44, comportant en outre des moyens (168) pour commander le fonctionnement dudit distributeur (70, 70') et desdits moyens (54) pour appliquer d'une manière sélective ladite énergie prescrite de manière à répéter d'une manière alternée le dépôt de la matière liquide audessus d'une couche solidifiée en dernier et l'application de ladite énergie prescrite.
